(19) **Europäisches Patentamt / European Patent Office / Office européen des brevets**

(11) **EP 2 406 943 B1**

(12) **EUROPEAN PATENT SPECIFICATION**

(45) Date of publication and mention
of the grant of the patent:
**15.06.2016 Bulletin 2016/24**

(51) Int Cl.:
*H04N 1/64* (2006.01)      *G09G 5/04* (2006.01)
*H04N 9/64* (2006.01)

(21) Application number: **10708000.4**

(22) Date of filing: **01.02.2010**

(86) International application number:
**PCT/US2010/022700**

(87) International publication number:
**WO 2010/104624 (16.09.2010 Gazette 2010/37)**

(54) **EXTENDED DYNAMIC RANGE AND EXTENDED DIMENSIONALITY IMAGE SIGNAL CONVERSION**

BILDSIGNALUMSETZUNG MIT ERWEITERTEM DYNAMIKUMFANG UND ERWEITERTER DIMENSIONALITÄT

CONVERSION DE SIGNAL D'IMAGE À GAMME DYNAMIQUE ÉTENDUE ET DIMENSIONNALITÉ ÉTENDUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.03.2009 US 159003 P**
**02.09.2009 US 239176 P**
**11.01.2010 US 294005 P**

(43) Date of publication of application:
**18.01.2012 Bulletin 2012/03**

(60) Divisional application:
**16169142.3**

(73) Proprietor: **Dolby Laboratories Licensing Corporation**
**San Francisco, CA 94103-4813 (US)**

(72) Inventors:
• **MILLER, Jon, S.**
**Yardley, PA 19067-5509 (US)**
• **WEBB, Richard, W.**
**Sammamish, WA 98074 (US)**
• **STEC, Kevin J.**
**Los Angeles, CA 90068 (US)**

(74) Representative: **Dolby International AB**
**Patent Group Europe**
**Apollo Building, 3E**
**Herikerbergweg 1-35**
**1101 CN Amsterdam Zuidoost (NL)**

(56) References cited:
• **LARSON G W: "LogLuv encoding for full-gamut, high-dynamic range images" JOURNAL OF GRAPHICS TOOLS, ASSOCIATION FOR COMPUTING MACHINERY, NEW YORK, US, vol. 3, no. 1, 22 January 1999 (1999-01-22), pages 15-31, XP009133824 ISSN: 1086-7651 cited in the application**

**Description**

RELATED PATENT APPLICATIONS

This Application is related to co-pending United States Provisional Patent Applications No. 61/159,003 filed on March 10, 2009; No. 61/239,176 filed on September 2, 2009; and No. 61/294,005 filed January 11, 2010, all to inventors Miller, Webb, and Stec, both titled EXTENDED DYNAMIC RANGE AND EXTENDED DIMENSIONALITY IMAGE SIGNAL DELIVERY VIA LEGACY VIDEO INTERFACES, and both assigned to the Assignee of the present Application.

FIELD OF THE INVENTION

The present invention relates generally to media. More specifically, embodiments of the present invention relate to delivery of extended dynamic range, extended dimensionality image and related signals via legacy video interfaces.

BACKGROUND

The dynamic range of media content containing visual information has been extended to wider ranges than the relatively low dynamic ranges to which the operation of legacy monitors, televisions, cinema screens and other displays has typically been limited. High Dynamic Range (HDR) images and videos have become more commonplace. In general, HDR can include the complete visual range of intensities and colors. The term also is used to describe some display technologies that are capable of displaying a relatively high dynamic range. There is no agreed-upon definition of HDR or of how HDR signals are represented. For example, for still images, Photoshop®, an application by Adobe Systems Inc. of San Jose, California, USA uses the term HDR for images that have 32 bits floating point per channel, e.g., per color or defining coordinate in a color space, and Adobe Photoshop started support for HDR images in version CS2. Color management systems, e.g., Colorsync® by Apple Inc. of Cupertino, California allow for 32-bit floating point per color coordinate encoding. Therefore, a typical three-channel still HDR image can be encoded in 96-bits.

Gregory Larson introduced logLuv as an encoding for HDR images, see LARSON G W: LogLuv encoding for full-gamut, high-dynamic range images, JOURNAL OF GRAPHICS, ASSOCIATION FOR COMPUTING MACHINERY, NEW YORK, US, vol. 3, no.1, 22 January 1999, pages 15-31, XP009133824, ISSN: 1086-7651. "LogLuv TIFF" is a file format that combines logarithmic encoding of luminance with a linear coding of chromaticity to cover the full visible spectrum. Pixel data is stored as 24-bit and 32-bit floating point numbers. The color space is CIE-1931 *XYZ*. This publication discloses converting color components into a device-independent color space.

The original logLuv specification also provided fitting HDR images compactly into 24-bit and 32-bit formats. That 32-bit logLuv format had a sign bit, 15 bits for log-luminance, and 8 bits each for *u' and* v' and was capable of representing a luminance dynamic range of 38 orders of magnitude.

Furthermore, new monitor technologies, e.g., combining modulation of backlighting and of transmittance, such as a combination of modulated LED backlighting and LCD transmittance, can display relatively high dynamic range images.

Furthermore, referring again to the original logLuv 32-bit specification, 8-bits for *u*' and v' may lead to color contouring and other perceptible effects, especially for colors close to white. For true HDR, full color range is needed.

In addition to extending the dynamic range available for video and other image related media moreover, a dimensionality aspect related to the media may also be extended, for example, to three-dimensional (3D) video. 3D video effectively adds an at least apparent third, e.g., depth related dimension to video content. As used herein, the term extended dimensionality may relate to 3D video and related image signals.

As used herein, the terms extended dynamic range and HDR are used essentially interchangeably, for example for discussion or illustration related purposes. As used herein, the terms extended dimensionality and 3D video, and the terms related to extended dynamic range may, unless expressly stated to the contrary, be used essentially interchangeably for example for discussion or illustration related purposes, and not by way of limitation.

Display monitors and display screens may communicatively couple and exchange signals over an audiovisual (AV) interface with sources of HDR media content, e.g., receive video signals therefrom to be rendered and control signals, and return control related performance data. Such sources include Blu-ray Disc (TM) players or a network interface coupled to a network over which video information is communicated.

AV interfaces exist and are being developed to handle the data flow associated with transmitting and/or rendering HDR content. HDR display monitors may similarly be able to render other extended dynamic range signals.

While display technologies capable of displaying HDR images are being developed and will become more widespread, legacy devices such as relatively low dynamic range monitors are still, and may remain in common use for some indeterminate yet possibly significant span of time. Similarly, cinema screens in movie theaters that are capable of displaying relatively low dynamic range are still, and may remain in common use for some indeterminate yet possibly significant span of time.

Furthermore, while new AV interfaces are and will be developed, existing so called "legacy" media interfaces are in common use, and are likely to continue to remain in common use for some indeterminate yet possibly significant span of time. Such legacy interfaces include High Definition Multimedia Interface (HDMI), Digital Visual Interface (DVI), Serial Digital Interface (SDI), and 'Display-Port' associated interfaces.

The approaches described in this background section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Issues identified with respect to one or more approaches should not assume to have been recognized in any prior art on the basis of this section, unless otherwise indicated.

BRIEF DESCRIPTION OF THE DRAWINGS

FIG. 1 shows the entire range of visible luminance and various example subranges.

FIGS. 2A shows a graph of color difference for various bit depths for quantized log luminance.

FIG. 2B shows a graph of color difference for various bit depths for quantized chrominance components at several normalized luminance values.

FIG. 3 shows a simplified flowchart of one method embodiment of converting data, e.g., video data in one color space to data in the visual dynamic range (VDR) digital format.

FIG. 4 shows a simplified block diagram of an apparatus configured in operation to convert data, e.g., video data in one color space to data in VDR digital format.

FIGS. 5A, 5B, and 5C show examples of prior art HDMI signal configurations for video signals in the common *RGB* 4:4:4, $YC_bC_r$ 4:4:4 format and $YC_bC_r$ 4:2:2 format, respectively.

FIG. 6 shows an example 36-bit VDR signal mapped to a 24-bit HDMI $YC_bC_r$ 4:2:2 format legacy container according to an embodiment of the present invention.

FIG. 7A shows an example 35-bit VDR signal mapped to a 24-bit HDMI $YC_bC_r$ 4:4:4 format legacy container according to an embodiment of the present invention.

FIG. 7B shows an example 34-bit VDR signal mapped to a 24-bit HDMI $YC_bC_r$ 4:4:4 or *RGB* 4:4:4 format legacy container according to an embodiment of the present invention.

FIG. 7C shows an example 33-bit VDR signal mapped to a 24-bit HDMI $YC_bC_r$ 4:4:4 or *RGB* 4:4:4 format legacy container according to an embodiment of the present invention.

FIG. 8 shows one embodiment of packing VDR data in a legacy SDI interface according to an embodiment of the present invention.

FIGS. 9A and 9B show one embodiment of the bit allocation of 39 bits per pixel for two consecutive pixels into a first and a second SDI container for the two channels used to transport a 39-bit per pixel VDR signal according to an embodiment of the present invention.

FIGS. 9C and 9D show an alternate embodiment of the bit allocation of 39 bits per pixel for two consecutive pixels into a first and a second SDI container.

FIGS. 9E and 9F show another alternate embodiment of the bit allocation for two consecutive pixels into a first and a second SDI container.

FIG. 10 depicts an example system that includes a high dynamic range display and an example legacy component, according to an embodiment of the present invention.

FIG. 11 depicts example methods for delivery of signals encoding three-dimensional content over a legacy interface, according to some embodiments of the present invention.

FIG. 12A, FIG. 12B, FIG. 12C and FIG. 12D respectively depict flowcharts for example procedures according to embodiments of the present invention.

FIG. 13 depicts an example processing system with which some embodiments of the present invention may be implemented.

FIG. 14 depicts an example integrated circuit device with which some embodiments of the present invention may be implemented.

DESCRIPTION OF EXAMPLE EMBODIMENTS

Formation of extended dynamic range, extended dimensionality and related image signals is described herein, as is delivery of extended dynamic range, extended dimensionality and related image signals via legacy video interfaces. In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily occluding, obscuring, or obfuscating the present invention.

*Overview*

Example embodiments described herein relate to formation and/or delivery of extended dynamic range, extended dimensionality and related image signals via legacy video interfaces. We introduce a format identified as Visual Dynamic Range (VDR) that can incorporate the simultaneously visible dynamic range colors.

Extended dynamic range video, such as a high dynamic range (HDR) video media signal can be encoded into the VDR data format. Described are mapping of VDR data for delivery with a legacy media interface such as the High Definition Multimedia Interface (HDMI), Digital Visual Interface (DVI), Serial Digital Interface (SDI), or a DisplayPort associated interface.

Particular embodiments include a method comprising accepting data that represents color components of a picture element, and in the case that the color components are not in a device independent color space, converting the color components to values in a device independent color space. The method further includes converting the values in the device independent color space to VDR data represented by three variables denoted $L_D$, $u'$, and $v'$, wherein, for $L_D$ in the range [0,1], $L_D = (\alpha \log_2 Y) + \beta$, with $Y$ denoting the value of luminance value in cd/m$^2$ in the CIE-1931 *XYZ* color space corresponding to the values in the device independent color space, $\alpha$ denoting a scale parameter, and $\beta$ denoting a bias parameter, and wherein $u'$ $v'$ are the chrominance values in the CIE-1976 luminance-chrominance color space corresponding to the values in the device independent color space. The method further includes quantizing the $L_D$, $u'$, and $v'$ values to a digital $L_D$ value of a first number of bits, *denoted n* and to digital $u'$ and $v'$ values each of a second number of bits, denoted *m*.

Particular embodiments include a method, comprising accepting VDR video signal data represented by three values, comprising a first value being an n-bit quantized value of a luminance related value denoted $L_D$, wherein, for data represented in the CIE-1931 *XYZ* color space by values *X, Y* and *Z*, with *Y* denoting the value of luminance value in cd/m$^2$, $L_D = (\alpha \log_2 Y) + \beta$, a denoting a scale parameter, and $\beta$ denoting a bias parameter, and second and third values being m-bit quantized chrominance values, denoted $u'$ and $v'$, in the CIE-1976 luminance-chrominance color space corresponding to the *X, Y* and *Z*, values. The method further includes mapping the accepted video signal data to a container format that conforms to a legacy video interface. The visual dynamic range data is transportable over the legacy media interface.

In the above methods, $\alpha$=77/2048 and $\beta$=1/2, such that $L_D = (\dfrac{77}{2048} \log_2 Y) + \dfrac{1}{2}$ . The *n*-bit digital $L_D$ value denoted $D'_L$ and *m*-bit digital $u'$ and $v'$ values expressed as integers denoted $D'_u$ and $D'_v$, respectively, are

$$D'_L = \mathrm{INT}\big[(253 L_D + 1) \cdot 2^{n-8}\big]$$

$$D'_u = \mathrm{INT}\left[\left(Su' + B\right) \cdot 2^{m-8}\right]$$

and

$$D'_v = \mathrm{INT}\left[\left(Sv' + B\right) \cdot 2^{m-8}\right],$$

with parameter S = 406 + 43/64 and parameter $B$ = 35/64, and INT[·] being an integer function that rounds any number, including rounding up to the next highest integer value any number with a fractional part greater or equal to 0.5, and rounding down any number with a fractional part less than 0.5.

In some embodiments of these methods, the quantized luminance related values and the quantized chrominance related values are at the same spatial resolution, such that on average there *are n +2m* bits per pixel of VDR data. In other embodiments, the quantized chrominance related values are at half the horizontal spatial resolution of the quantized luminance related values, such that on average there are *n +m* bits per pixel of VDR data.

In some embodiments of these methods, the legacy video interface is an HDMI interface, while in other embodiments the legacy video interface is an SDI interface. In some embodiments the HDMI interface conforms to the HDMI standard of version at least HDMI 1.3a.

When the legacy video interface is an HDMI interface and the quantized chrominance related values are at half the horizontal spatial resolution of the quantized luminance related values, the legacy video interface can be a 24-bit HDMI $YC_bC_r$ 4:2:2 interface. For the color values of a pair of horizontally adjacent pixels consisting of a first pixel and an adjacent second pixel, the mapping is such that the 12 most significant bits of the luminance related data for each pixel are mapped to the bit locations allocated to the $Y$ values in the container, the bits of the chrominance related data for the pair of pixels are mapped to the most significant bit locations allocated to the $C_b$ and $C_r$ values in the container, and any bit or bits of the of the luminance related data not mapped to location or locations dedicated to Yvalues are mapped to remaining bit location or locations allocated to the $C_r$ and $C_b$ values in the container. In some particular versions, the bits of the v' related data for the pair of pixels are mapped to the most significant bit locations allocated to the $C_b$ values in the container, any bit or bits of the luminance related data of the first pixel of the pair not mapped to location or locations dedicated to Yvalues are mapped to remaining bit locations allocated to the $C_b$ values in the container, the bits of the u' related data for the pair of pixels are mapped to the most significant bit locations allocated to the $C_r$ values in the container, any bit or bits of the luminance related data of the second pixel of the pair not mapped to location or locations dedicated to Yvalues are mapped to remaining bit locations allocated to the $C_r$ values in the container.

The legacy video interface can be an HDMI interface and the quantized chrominance related values can be at half the horizontal spatial resolution of the quantized luminance related values, the legacy video interface is a 24-bit HDMI *RGB* 4:4:4 interface. For the color values of a pair of horizontally adjacent pixels consisting of a first pixel and an adjacent second pixel, the mapping is such that the 8 most significant bits of the luminance related data for each pixel are mapped to the bit locations allocated to a particular one of the *RGB* (red, green, and blue) components in the container, the bits of the chrominance related data for the pair of pixels are mapped to the most significant bit locations allocated to the other two *RGB* components in the container, and any bit or bits of the luminance related data not mapped to location or locations dedicated to Yvalues are mapped to remaining bit location or locations allocated to the other two *RGB* components in the container. In some particular versions, the eight most significant bits of luminance related data for each pixel are mapped to the bit locations allocated to the G values in the container, the eight most significant bits of the v' related data for the pair of pixels are mapped to the bit locations allocated to the B values in the container for the first pixel of the pair, the least significant bits of the v' related data for the pair of pixels are mapped to some of the bit locations allocated to the $R$ values in the container for the first pixel, the least significant bits of the $L_D$ related data for the first pixel are mapped to some of the bit locations allocated to the $R$ values in the container for the first pixel, the eight most significant bits of the *u'* related data for the pair of pixels are mapped to the bit locations allocated to the $R$ values in the container for the second pixel of the pair, the least significant bits of the *u'* related data for the pair of pixels are mapped to some of the bit locations allocated to the $B$ values in the container for the second pixel, and the least significant bits of the $L_D$ related data for the second pixel are mapped to some of the bit locations allocated to the $B$ values in the container for the second pixel.

The legacy video interface can be an HDMI interface and the quantized chrominance related values can be at half the horizontal spatial resolution of the quantized luminance related values, the legacy video interface is a 24-bit HDMI $YC_bC_r$ 4:4:4 interface. For the color values of a pair of horizontally adjacent pixels consisting of a first pixel and an adjacent second pixel, the mapping is such that the eight most significant bits of luminance related data for each pixel are mapped to the bit locations allocated to the $Y$ values in the container, the eight most significant bits of the chrominance related data for the pair of pixels are mapped to the bit locations allocated to the $C_r$ and $C_b$ values in the container for the first pixel of the pair, the least significant bits of the $L_D$ related data for the first and second pixel and the least significant bits of the chrominance related data for the pair of pixels are mapped to some of the bit locations allocated to the $C_r$ and $C_b$ values in the container for the first and second pixel. In some particular versions, the eight most significant bits of luminance related data for each pixel are mapped to the bit locations allocated to the $Y$ values in the container, the eight most significant bits of the v' related data for the pair of pixels are mapped to the bit locations allocated to the $C_b$ values in the container for the first pixel of the pair, the least significant bits of the v' related data for the pair of pixels are mapped to some of the bit locations allocated to the $C_r$ values in the container for the first pixel, the least significant bits of the $L_D$ related data for the first pixel are mapped to some of the bit locations allocated to the $C_r$ values in the container for the first pixel, the eight most significant bits of the u' related data for the pair of pixels are mapped to the bit locations allocated to the $C_r$ values in the container for the second pixel of the pair, the least significant bits of the u' related data for the pair of pixels are mapped to some of the bit locations allocated to the $C_b$ values in the container for the second pixel, and the least significant bits of the $L_D$ related data for the second pixel are mapped to some of the bit locations allocated to the $C_b$ values in the container for the second pixel.

The legacy video interface can be an SDI interface and the quantized chrominance related values can be at half the horizontal spatial resolution of the quantized luminance related values, the legacy video interface is a 20-bit SDI $YC_bC_r$ 4:2:2 interface. For the color values of a pair of horizontally adjacent pixels consisting of a first pixel and an adjacent second pixel, the mapping is such that the luminance related data for each pixel are mapped to the bit locations allocated to the $Y$ values in the container, and the chrominance related data for the pair of pixels are mapped to the bit locations allocated to the $C_r$ and $C_b$ values in the container for the pair. In some particular versions, the v' related data for the pair of pixels are mapped to the bit locations allocated to the $C_b$ values in the container for the pair, and the u' related data for the pair of pixels are mapped to the bit locations allocated to the $C_r$ values in the container for pair.

The legacy video interface can include two SDI channels, including a first channel and a second channel, and the accepted data can be part of video data, and the quantized luminance related values and the quantized chrominance related values can be at the same spatial resolution. Each SDI channel is a 20-bit SDI $YC_bC_r$ 4:2:2 interface. For the color values of a pair of horizontally adjacent pixels consisting of a first pixel and an adjacent second pixel, the mapping is such that the 10 most significant bits of the luminance related data for each pixel are mapped to the bit locations allocated to the $Y$ values in the container for the one of the channels, the 10 most significant bits of the u' and v' related data for the first and second pixels are mapped to the bit locations allocated to the $C_b$ and $C_r$ values in each container for the first and second channel, and in the case more than 10 bits are used for any of the luminance or chrominance values, any least significant bit or bits of the luminance or chrominance values that use more than 10-bits are mapped to the locations allocated to the $Y$ values in the container of the channel other than the channel into which the most significant bits of the luminance values are mapped.

In some embodiments of these methods, the first number of bits $n$ is at least 10, and the second number of bits $m$ is at least 10.

The VDR data can be output via a legacy interface. The legacy interface can be an HDMI interface or an SDI interface.

As described herein, in different embodiments, data are defined, which relate to a picture element (pixel), e.g., for a signal for video material that is characterized by an extended dynamic range or extended dimensionality. The defined video signal data is mapped to a container format that conforms to a legacy video interface. The extended dynamic range video signal data are thus transportable over the legacy media interface.

In one embodiment, a brightness component of the pixel data is represented on a logarithmic scale. Two (2) color components of the video signal data are each represented on a linear scale. A quantized n-bit log-luminance value may be computed from a physical luminance value that is associated with the extended range video material. A transformation may be computed on a set of component color values that are associated with the extended range video material. The transformation may define color values over at least two linear color scales. The component color values may correspond to values in a device-independent color space, e.g., the CIE-1931 XYZ color space. Two linear color scales may each correspond respectively to chrominance coordinates in a (u', v') color space.

Log-luminance values and a plurality of the color values from each of the two color scales may be mapped to a 4:2:2 data container, which conforms to a format associated with the legacy video media. The mapping may include selecting, from among an order with which the color values are related on the color scales, every other pair of color values from each of the color scales. The mapping may be performed with the selected pairs of values.

The log-luminance values may, additionally or alternatively, be mapped to a luma related channel of a 4:4:4 data container, which conforms to a format associated with the legacy video media. The most significant bits for each of the color values from a first of the two color scales may be mapped to even pixels of a first color channel of the 4:4:4 data container. The most significant bits for each of the color values from a second of the two color scales may be mapped to odd pixels of a first color channel of the 4:4:4 data container.

Upon receipt at a display that has a capability of rendering extended dynamic range material via the legacy media interface, the video signal data is decodable to effectively render the extended range video material on the extended dynamic range capable display. Moreover, upon receipt via the legacy media interface at a display that lacks a capability of rendering extended dynamic range material, the video signal data is decodable to visibly render the video content at a display referred dynamic range, which may be narrower than the extended dynamic range. The extended dynamic range may include high dynamic range, visual dynamic range, wide color gamut, visual color gamut, and/or three dimensional video content. The legacy media interface may include High Definition Multimedia Interface (HDMI), Digital Visual Interface (DVI) Serial Digital Interface (SDI), and/or DisplayPort interfaces, among others.

The data demand that is associated with an HDR video signal can effectively be reduced. A luma-related component, e.g., luminance of the HDR signal can be encoded in a logarithmic format. A full resolution chroma-related component, e.g., chrominance of the HDR signal can be packaged in a 4:2:2 container format. The 4:2:2 packaged chroma-related components may be mapped to a 4:4:4 display format. Significantly, the packaged chroma-related component can be mapped to the 4:4:4 display format independent of metadata, which may relate to the HDR signal. The HDR signal is thus transportable over a legacy media interface, such as HDMI, DVI, SDI or DisplayPort. Embodiments may function without requiring additional information encoding and packaging within the legacy signal.

For example, an embodiment may effectively transmit HDR over HDMI and other legacy interfaces without requiring any particular metadata, associated with the HDMI interface medium, to achieve the transmission. Metadata that may be associated with HDMI and other legacy interfaces may exist outside of a primary video stream associated therewith, and may thus be somewhat vulnerable to loss or corruption in real world system chains, networks and applications.

Moreover, embodiments of the present invention may allow VDR signals repackaged therewith to be viewable on legacy, e.g., relatively low dynamic range or other non-HDR displays. It should be appreciated by those skilled in the arts relating to media, audio and video encoding, displays, and media interfaces, that although embodiments allow VDR signals repackaged therewith to be viewable on legacy displays, such non-HDR displays may not optimally render the full amount of VDR, 3D video and related information, provided thereto via the interface, as the embodiments provide. For example, VDR video content may be viewably and recognizably rendered on the relatively low dynamic range display device, albeit with potentially sub-optimal, inaccurate or incorrect brightness or color signal components, which may affect achievable video display quality. The video quality so provided will suffice for navigating and menus, using related graphical user interfaces or similar, relatively somewhat limited uses, but may lack sufficient quality to satisfy most aesthetic or viewing preferences.

An embodiment may thus promote user convenience. For example, in a hypothetical situation in which a media source, such as a BD player, has an associated HDR mode activated "inappropriately," e.g., for providing a video input to a relatively low dynamic range display, a user can still see that an image is present and maintain the ability to navigate relatively low dynamic range rendered on-screen GUI menus, with which the user may take corrective action. Also for example, where a video system chain or milieu includes a non-VDR capable device, such as a legacy audiovisual receiver between a source of VDR data, e.g., a Blu-Ray player that generated VDR data, and an VDR capable display, on-screen displays generated with the non-VDR capable device remain visible and usable on the VDR-capable display.

Particular embodiments may provide all, some, or none of these aspects, features, or advantages. Particular embodiments may provide one or more other aspects, features, or advantages, one or more of which may be readily apparent to a person skilled in the art from the figures, descriptions, and claims herein.

*Description of example embodiments*

Presented herein is a method of converting image data, e.g., HDR data to a digital representation suitable for delivery of high dynamic range image data that can cover the complete range of human perceptible colors.

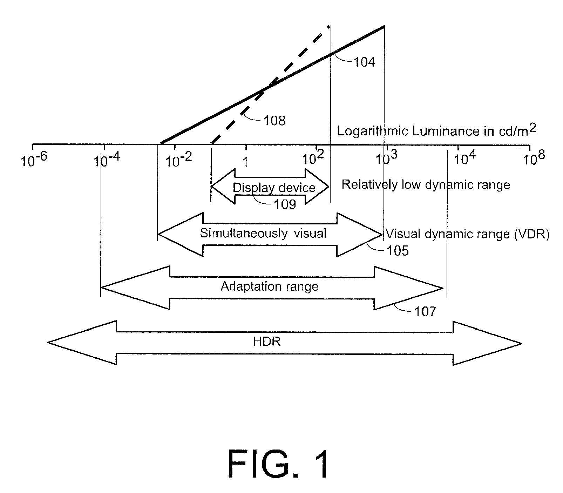

FIG. 1 shows the entire range of visible luminance that can be represented by, for example, HDR representations that use 32-bits for each color component. There are roughly 14 or so orders of magnitude, so that the dynamic range shown on the horizontal scale is $10^{14}:1$. A human being can typically not simultaneously perceive such a wide range. At any time, a human being can typically only perceive 5 to 6 orders of magnitude, i.e., $10^5:1$ to $10^6:1$. This dynamic range is shown as range 105 in FIG. 1, and by solid line 104. With adaptation, a human being can see a wider range shown as range 107 in FIG. 1. Range 109, shown also as broken line 108, shows the dynamic range of a typical 8-bit gamma-mapped display. This relatively low dynamic range is a little over 2 orders of magnitude.

We call the simultaneously visible dynamic range of luminance range 105 (line 104) the Visual Dynamic Range, or VDR. We call the range of colors that are perceivable the visual color gamut. We also use VDR to denote a representation of image data with the VDR luminance range and complete visual color gamut.

It is proper to maintain true HDR for capture and image creation. We assert that because VDR covers the simultaneously visible dynamic range, distribution and consumption do not require true HDR; VDR is sufficient. Anything beyond VDR is invisible without further processing, e.g., without tone-mapping. VDR is essentially the dynamic range of the human retina's response. We therefore assert that VDR is a future-proof distribution format and also a reasonable target for displays.

Image data, e.g., HDR data may be converted to a digital VDR format suitable for delivery of high dynamic range image data that can cover the complete range of human perceptible colors distribution.

In particular, described herein is a VDR digital format that can represent images with luminance from about 0.0001 cd/m$^2$ to 10$^4$ cd/m$^2$ using 32 bits with approximately 1/2 just noticeable difference (JND) resolution, i.e., the resolution is approximately 1/2 the JND in color and luminance. Also described herein is a method of converting from an image in a device independent color to the VDR format.

Also described herein are methods and apparatuses for converting image data in VDR digital format through legacy interfaces such as HDMI, VDI, and SDI.

*The VDR digital format and conversion thereto and therefrom*

An embodiment may use VDR technology, which inherently comprises WCG capability. HDR spans virtually unlimited brightness and color ranges, and thus encompasses the entire luminance and color span of the human psycho-visual system, and thus spans the dimmest luminance that a human can visually perceive to the brightest luminance that a human can perceive, based, e.g., on known experimental data. Within the HDR expanse, VDR images are perception-referred. VDR images encompass all the luminance and color that the human visual system can simultaneously perceive. An embodiment efficiently represents VDR with a relatively economical 32 bits per pixel at approximately one half (1/2) JND resolution (precision) in both luminance and color.

An embodiment generates VDR data with a transformation, performed over CIE *XYZ* tristimulus values, into a domain that is fairly uniform perceptually prior to quantization to digital values.

Modern color management systems store color in a device independent color space. Therefore, it is known how to convert any device dependent color signal, e.g., a gamma-corrected *R'G'B'* color signal to a device independent color.

Consider a set of color coordinates expressed in a device independent color space. While not limited to such a color space, for brevity, and without loss of generality, assume color coordinates are in the 1931 *XYZ* color space. Conversion to and from the CIE-1931 *XYZ* color space is known. Those skilled in the art will be familiar with conversions between different device independent color spaces, and also how to convert to and from a device dependent color, e.g., using a device profile.

The transformations applied to the CIE-1931 *XYZ* values (set of color coordinates) essentially comprise a parameterized generalization of the values used for the logLu'v' format introduced by Gregory Larson in 1998. See Gregory W. Larson, "the LogLuv encoding for full-gamut, high dynamic range images", Journal of Graphics Tools, col. 3, No. 1, pp 15-31, 1998.

For VDR, the method according to the invention computes log-luminance, denoted $L_D$, from the Y value (the luminance) of the CIE-1931 *XYZ* values, and expressed in a general form using a scale parameter denoted $\alpha$, and a bias parameter denoted $\beta$, according to Eqn. 2A as follows.

$$L_D = (\alpha \log_2 Y) + \beta \qquad (2A)$$

where *Y* is expressed in cd/m2. The inverse transformation from $L_D$ to *Y* is:

$$Y = 2^{(L_D - \frac{1}{2})/\alpha}. \qquad (2B)$$

Scale parameter denoted $\alpha$ allows an embodiment to include tuning this format to meet different functional needs. The bias parameter $\beta$ determines the range of overall luminance in cd/m$^2$.

The parameters $\alpha$ and $\beta$ are chosen such that $\alpha$ =77/2048 and $\beta$ =1/2 so that the relationship between the *Y* value and $L_D$ is

$$L_D = (\frac{77}{2048} \log_2 Y) + \frac{1}{2}. \qquad (2C)$$

These specified values for $\alpha$ and $\beta$ map a specific symmetric range of luminance values (nominally 0.0001 to 10000 cd/m$^2$) to the range in $L_D$ of 0.0 to 1.0. The luminance equation maps a range of luminance values into the interval [0.0,1.0]. The value for $\alpha$ determines the minimum luminance to be $2^{-1/(2\alpha)}$. The value for $\alpha$ also determines the overall dynamic range to be $2^{1/\alpha}$.

The inverse transformation from $L_D$ to $Y$ for the particular $\alpha$ and $\beta$ is then

$$Y = 2^{(L_D - 1/2)/\alpha} . \tag{2D}$$

Two other values-chrominance values - are used. These chrominance color coordinates are the well known CIE-1976 $u'\,v'$ coordinates obtained form CIE $XYZ$ values as follows

$$u' = \frac{4X}{X + 15Y + 3Z} \qquad v' = \frac{9Y}{X + 15Y + 3Z} \tag{3A, 3B.}$$

Inverse transformations from $u'\,v'$ are as follows:

$$X = \frac{9u'}{4v'}Y \qquad Z = \frac{12 - 3u' - 20v'}{4v'}Y . \tag{4A, 4B.}$$

The method according to the invention further uses the parameter values of Eqns. (2A), (3A) and (3{B), to digitize the representations to a number denoted $n$ of bits for $L_D$ and a number denoted $m$ of bits for each of $u'$ and v'

$$D'_L = \text{INT}\left[(253L_D + 1) \cdot 2^{n-8}\right], \tag{5A}$$

$$D'_u = \text{INT}\left[(Su' + B) \cdot 2^{m-8}\right], \text{ and} \tag{5B}$$

$$D'_v = \text{INT}\left[(Sv' + B) \cdot 2^{m-8}\right], \tag{5C}$$

where parameter S = 406 + 43/64 and parameter $B$ = 35/64. The operator INT[·] is an integer function that rounds any number, including rounding up to the next highest integer value any number with a fractional part greater or equal to 0.5, and rounding down any number with a fractional part less than 0.5.

The inventors have found that to cover the complete simultaneously visible color range and the complete visible gamut of colors with JND of approximately ½ or less, it is sufficient to *have n* of at least 10 bits, and *m* of at least 11 bits.

Therefore in one embodiment, a 32 bit representation of color, with 10-bits for $D'_L$ and 11- bits for each of $D'_u$ and $D'_v$ can achieves full VDR with a JND of approximatey1/2 resolution in both luminance and color. In another embodiment, a 35 bit representation of color, with 11-bits for $D'_L$ and 12- bits for each of $D'_u$ and $D'_v$ achieves full VDR with a JND of between 1/2 and 1/3 resolution in both luminance and color. In yet another embodiment, a 36 bit representation of color, with 12-bits for $D'_L$ and 12- bits for each of $D'_u$ and $D'_v$ achieves full VDR with a JND of approximately 1/8 resolution in luminance while maintaining approximately 1/3 JND resolution in color.

The VDR format allows arbitrary selection of bit depth for luminance and chroma portions, which allows for flexibility of use in various situations.

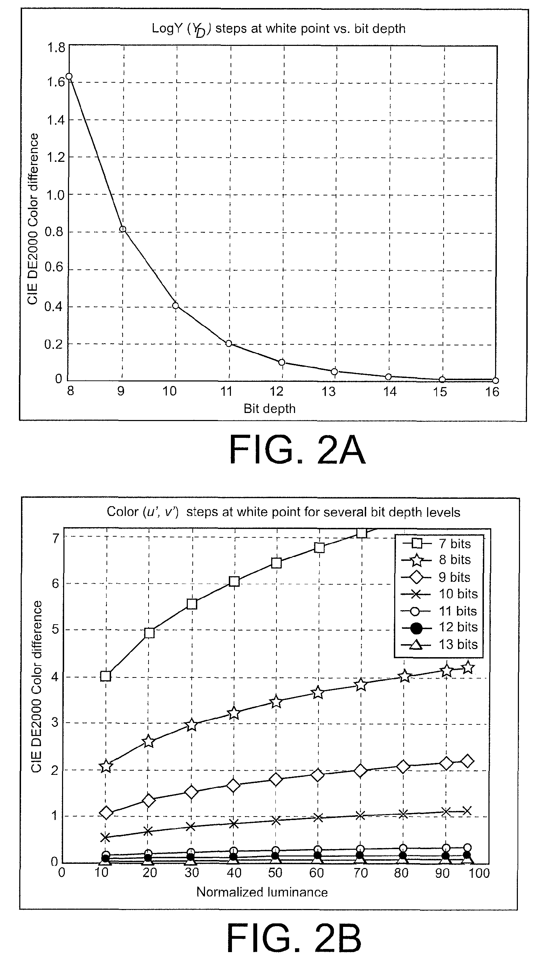

FIG. 2A shows a graph of maximum color difference as measured according to the CIE DE2000 color difference equations for various bit depth for the quantized log luminance ($L_D$, or when quantized, $D'_L$). FIG. 2B shows a graph of maximum color difference as measured according to the CIE DE2000 color difference equations for various bit depth for the quantized chrominance components ($u'\,v'$, or when quantized, $D'_u$ and $D'_v$) at several luminance values, where luminance is normalized between 0 and 100. For the CIE DE2000 color difference equations, see the Wikipedia article "Color Difference" retrieved 2 November 2009 at en^dot^wikipedia^dot^org/wiki/Color_difference where ^dot^ is the period (".") in the actual URL.

Considering the 12-bits for $D'_L$ embodiment, the particular value of $\alpha = 77/2048$, enables this signal to represent values of luminance between 0.99694 x $10^{-4}$ cd/m$^2$ at 12-bit codeword $17_{10}$ for $L_D$ to a maximum value of 10788.89 cd/m$^2$ at 12-bit codeword $4079_{10}$ for $L_D$. Additionally, a mid-grey level 12-bit codeword of $2988_{10}$ for $L_D$ corresponds to a luminance of75.001 cd/m2. This range comes with a precision level of 0.455% per step, which falls below the Digital Imaging and Communications in Medicine (DICOM) just noticeable difference (JND) of 0.65% at higher luminance levels, and well below the DICOM JND range of 1% to 8% at lower luminance levels. Some reference luminance levels are shown in Table 3 below with their corresponding codewords. In one embodiment, codeword 16 is defined to represent 0 light. In one embodiment, codewords 0-15, and 4080-4095 are reserved.

Table 1: Output luminance for selected codewords

| 12-bit codeword (base 10) | Output luminance |
| --- | --- |
| 1029 | 0.01 cd/m$^2$ |
| 1534 | 0.1 cd/m$^2$ |
| 2040 | 1.0 cd/m$^2$ |
| 2546 | 10.0 cd/m$^2$ |
| 2899 | 50.0 cd/m$^2$ |
| 2988 | 75.0 cd/m$^2$ |
| 3051 | 99.9 cd/m$^2$ |
| 3091 | 119.9 cd/m$^2$ |
| 3140 | 149.9 cd/m$^2$ |
| 3203 | 199.7 cd/m$^2$ |
| 3252 | 249.6 cd/m$^2$ |
| 3292 | 299.5 cd/m$^2$ |
| 3405 | 501.0 cd/m$^2$ |
| 3557 | 1001.2 cd/m$^2$ |
| 3709 | 2000.5 cd/m$^2$ |
| 3910 | 4997.0 cd/m$^2$ |
| 4062 | 9985.1 cd/m$^2$ |

**Converting from common formats to VDR**

The method according to the invention allows for converting video data in one color space to data in VDR digital format. One example method embodiment described herein so converts data presented in gamma-corrected *RGB*, i.e., as *R'G'B'* components to VDR signals.

An apparatus can be configured to convert data, e.g., video data in one color space to data in VDR digital format. One example apparatus embodiment described herein is configured in operation to so convert data presented in gamma-corrected *RGB,* i.e., as *R'G'B'* components to VDR signals.

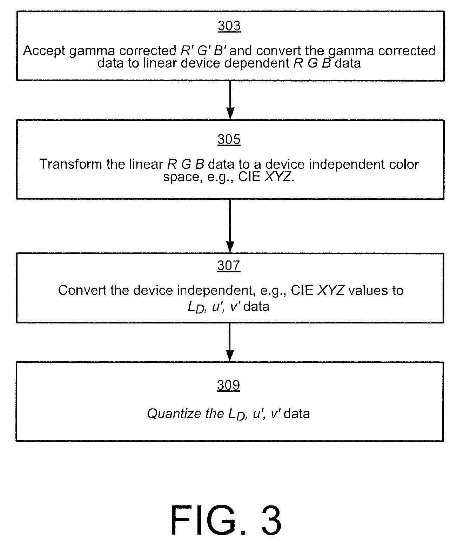

FIG. 3 shows a simplified flowchart of one method embodiment of converting data, e.g., video data in one color space to data in VDR digital format. Starting with gamma corrected R'G'B', step 303 converts the gamma corrected data to linear device dependent *R G B* data according to an inverse of the gamma correction. In step 305, the linear *R G B* data is transformed to a device independent color space. Assume a device profile is available that describes the conversion of the device dependent *R G B* to a device independent color space. In the example embodiment, assume the device independent color space is CIE-XYZ. In alternate embodiments, a different device independent space is used, e.g., CIE Lab or some other space. Furthermore, in some alternate embodiments, it is assumed that rather than a device profile, a method for transforming from the *R G B* to CIE-XYZ (or another device independent color space depending on the embodiment) is known. Step 305 either uses a device profile, or the known transforming method.

In a step 307, the XYZ device independent values are converted to $L_D$, u', v' data according to Eqns. (2A) or (2C), (3A) and (3B). In step 309 the $L_D$, u', v' data is quantized according to Eqns. (5A), (5B), and (5C). Of course, in some embodiments, the transformation *from XYZ* to the quantized values $D'_L$, $D'_u$, and $D'_v$ is carried out directly as one step.

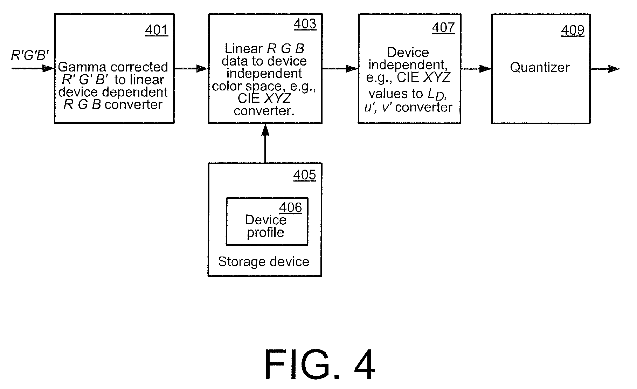

FIG. 4 shows a simplified block diagram of an apparatus configured in operation to convert data, e.g., video data in one color space to data in VDR digital format. Element 401 is configured to accept gamma corrected R'G'B', and to convert the gamma corrected data to linear device dependent $R\,G\,B$ data according to an inverse of the gamma correction. Element 403 is configured to convert the linear $R\,G\,B$ data to a device independent color space. One embodiment includes a storage element, e.g., a memory element 405 in which a device profile 406 is stored that describes the conversion of the device dependent $R\,G\,B$ to a device independent color space. In the example embodiment, assume the device independent color space is CIE-XYZ. In alternate embodiments, a different device independent space is used, e.g., CIE Lab or some other space. Furthermore, in some alternate embodiments, element 403 includes the transformations from the $R\,G\,B$ to CIE-XYZ (or another device independent color space depending on the embodiment), and in such a case, the device profile 406 is not used. Element 407 is coupled to the output of element 403 and is configured to convert the XYZ device independent values to $L_D$, $u'$, $v'$ data according Eqns. (2A) or (2C), (3A) and (3B). Element 409 further is configured to quantize the $L_D$, $u'$, $v'$ data according to Eqns. (5A), (5B), and (5C) and to output the quantized values $D'_L$, $D'_u$, and $D'_v$.

*Example embodiments of VDR over legacy interfaces*

Embodiments of the present invention essentially function to fit the additional information associated with VDR signals for transmission within the legacy interface channels, which were designed to carry significantly less information. Such legacy interfaces are usually associated with relatively low dynamic range media compared to VDR.

VDR over HDMI Interfaces

Because HDMI is likely to remain in use for a long time, aspects of the invention include distributing VDR signals over HDMI, in one of the standard HDMI signal configurations.

In the below-described examples show example signal configurations for various legacy interfaces, two pixels, labeled even pixels and odd pixels, are shown. These are two pixels, labeled by subscripts 0 and 1, respectively that are horizontally adjacent. Each configuration includes several, e.g., three multi-bit fields for each pixel. The bits in each field are numbered with bit 1 the least significant bit.

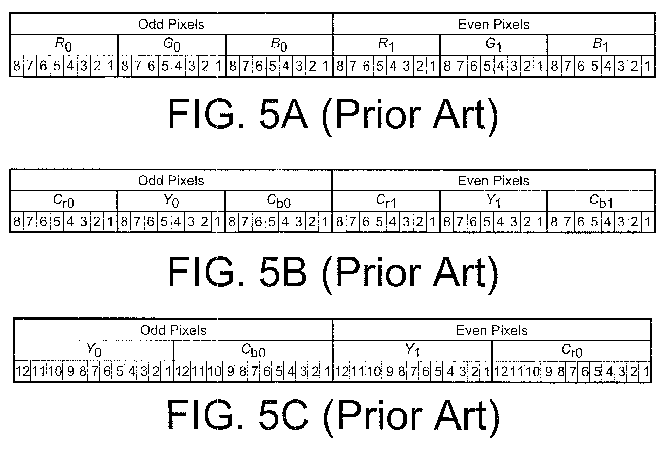

FIG. 5A shows an example of a prior art HDMI signal configuration for video signals in the common $RGB$ 4:4:4 format in which red, green, and blue color components are sampled at the same spatial sampling rate. The bits in each field are numbered with bit 1 the least significant bit. FIG. 5B shows an example of a prior art HDMI signal configuration for video signals in the common $YC_bC_r$ 4:4:4 format in which luma related components, blue chroma components, and red chroma components are sampled in space at the same spatial sampling frequency, so that each odd and even pixel individually has all the needed color components. FIG. 5C shows an example of an HDMI signal configuration for video signals in the common $YC_bC_r$ 4:2:2 format, e.g., as allowed in Specification HDMI1.3a, in which the luma related component is spatially sampled at twice the spatial sample rate as the two chroma related components. The chroma related components are sampled in the horizontal direction at half the rate of the luma related component. This is commonly called 2:1 horizontal downsampling without vertical downsampling. In an adjacent pair of an even and an odd pixel, each has its separate luma-related component, while the same $C_b$ and $C_r$ pair are used for both pixels in the pair.

Each of the HDMI configurations shown in FIGS. 5A, 5B, and 5C averages 24 bits of image information for each pixel. A pair of an even pixel and an adjacent odd pixel has 48 bits of color information.

The additional information associated with extended dynamic range signals and extended dimensional image signals can be encoded for efficient packaging that does not exceed this 24 bits for image information capacity associated with HDMI and other legacy interfaces.

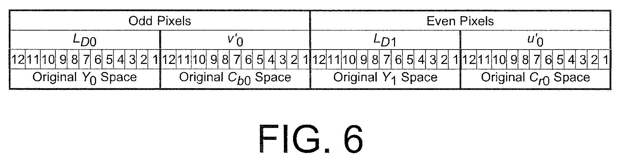

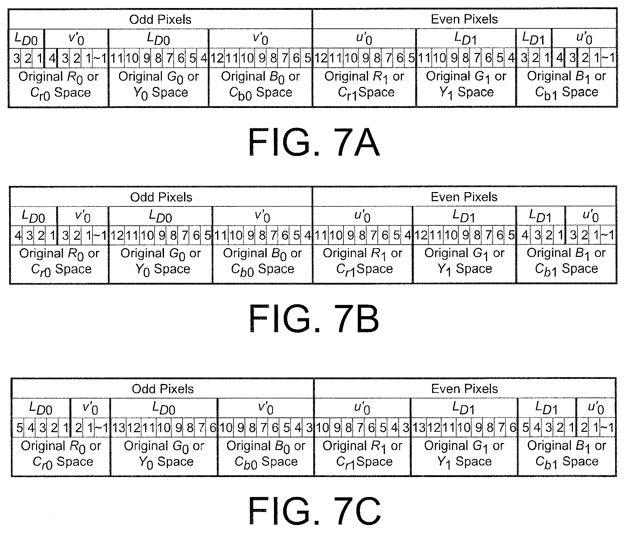

FIGS. 6, 7A, 7B, and 7C each shows an example $L_D\,u'\,v'$ VDR signal mapped over one of the 24-bit HDMI containers, according to embodiments of the present invention. Depending on the embodiments, to fit the 35 or 36 bits per pixel associated with a 35 or 36-bit $L_D\,u'\,v'$ signal into a 24 bit HDMI or other legacy package, in one embodiment, the 35 or 36-bits are mapped onto 24-bits. Clearly information is lost. Furthermore, because $u'\,v'$ encodes color information differently than $C_b\,C_r$, and $L_D\,u'\,v'$ *clearly encodes information* differently than $R\,G\,B$, the mapped-to-HDMI $L_D\,u'\,v'$ signals would not appear the same on an HDMI display device meant to accept HDMI information in $Y\,C_b\,C_r$ or $R\,G\,B$. Embodiments of the invention can exploit the approximate relationships between the components in $L_D\,u'\,v'$ to components in $Y\,C_b\,C_r$ or $R\,G\,B$ so that when the mapped-to-HDMI $L_D\,u'\,v'$ signals are viewed on a legacy display device, the images are still viewable, and can be used, for example, for diagnostic purposes.

FIG. 6 shows an example 36-bit $L_D\,u'\,v'$ VDR signal mapped to a 24-bit HDMI $YC_bC_r$ 4:2:2 format legacy container. 2:1 horizontal subsampling of the $u'\,v'$ data is assumed. The 36-bit data is reduced to 24-bits average per pixel. The 12-bit $L_D$ data is mapped to the 12 bits of the $Y$ channel. $L_D$ data is logarithmically scaled, and $Y$ is known to be power function scaled; yet both are monotonic functions of luminance. Hence, in this configuration, the $Y$ channel includes the 12 bits of the $L_D$ data. Both v' data and $C_b$ roughly represent a blue-yellow chroma related component. Hence, one embodiment maps the 12-bit v' data to the 12 bits of the $C_b$ channel. Similarly, since Both u' data and $C_r$ roughly represent a red-green chroma component, in one embodiment, the 12-bit u' data is mapped to the 12 bits of the $C_r$ channel.

Note that low values of v' typically represent blue colors and high values represent more yellow colors, in contrast to $C_b$, using which low values tend to be more yellow and high values somewhat more blue. In some alternate embodiments, to achieve a better match, the v' values are reversed in the HDMI carrier. However, the inventors found that in many cases such a mapping does not provide a significantly different overall visual experience to a human viewer to justify the additional computational, or hardware resources needed for such a reverse v' mapping. Hence the examples shown in FIG. 6 do not include such reversal.

HDMI 4:4:4 formats are more commonly used than is the HDMI $YC_bC_r$ 4:2:2 format. Hence some embodiments may map $L_D$ u' v' VDR signal to 24-bit HDMI 4:4:4 format legacy containers. FIG. 7A shows an example 35-bit $L_D$ u' v' VDR signal mapped to a 24-bit HDMI $YC_bC_r$ 4:4:4 format legacy container. FIG. 7A also shows a mapping to an HDMI $RGB$ 4:4:4 format legacy container. FIG. 7B shows an example 34-bit $L_D$ u' v' VDR signal mapped to a 24-bit HDMI $YC_bC_r$ 4:4:4 format legacy container. FIG. 7C shows an example 33-bit $L_D$ u' v' VDR signal mapped to a 24-bit HDMI $RBG$ 4:4:4 format legacy container. These 33- and 34-bit variations allow extra precision for the luminance signal at the expense of some precision in chroma if so desired, and illustrate the flexibility of bit depth assignments in this VDR encoding system. Other possibilities clearly are possible. FIGS. 7B and 7C also show a mapping to an HDMI $RGB$ 4:4:4 format legacy container. Each of these $L_D$ u' v' VDR signals is 2:1 subsampled in the horizontal direction.

Consider first the HDMI $RGB$ 4:4:4 cases illustrated by FIGS. 7A, 7B, and 7C. It is commonly known that in determining luminance, green is weighted more than red and blue. In some embodiments, the most significant bits-in some cases all bits-of the $L_D$ data are mapped to the green (G) channel. Furthermore, the most significant bits-in some cases all bits-of the v' data are mapped to the odd pixel blue channel, and the most significant bits-in some cases all bits-of the u' data are mapped to the even pixel red channel. In those embodiments in which there are remaining lesser significant bits, any remaining lesser significance bits of the $L_D$, u', and v' data are encoded into the remaining spaces. Thus, in such embodiments, the remaining odd and even pixel $L_D$ values are mapped to the most significant bits of the odd pixel R channel and even pixel B channel, respectively. The remaining least significant bits of the v', and u'channel are mapped to the least significant odd pixel R channel and even pixel B channel, respectively. When presented to a legacy display, such least significant bits may appear as noise.

The HDMI $YC_bC_r$ 4:4:4 format cases illustrated by FIGS. 7A, 7B, and 7C are similar. In some examples, the most significant bits-in some cases all bits-of the $L_D$ data are mapped to the $Y$ channel. Furthermore, the most significant bits-in some cases all bits-of the v' data are mapped to the odd pixel $C_b$ channel, and the most significant bits-in some cases all bits-of the u' data are mapped to the even pixel $C_r$ channel. In those examples in which there are remaining lesser significant bits, any remaining lesser significance bits of the $L_D$, u', and v' data are encoded into the remaining spaces. Thus, in such examples, the remaining odd and even pixel $L_D$ values are mapped to the most significant bits of the odd pixel $C_r$ channel and even pixel $C_b$ channel, respectively. The remaining least significant bits of the v', and u' channel are mapped to the least significant odd pixel $C_r$ channel and even pixel $C_b$ channel, respectively. When presented to a legacy display, such least significant bits may appear as noise.

The HDMI format may impose additional requirements, some of which may restrict certain data values. For example, HDMI formats may include rules that forbid data to have values of 0 and 255 in each channel. Some embodiments of the present invention can be made consistent with these rules to effectively avoid this restriction. For example, in the case of FIG. 7C with 13-bit $L_D$ data, the most significant groups corresponding to values of $L_D$ are essentially limited, prior to the packing operation, to a range of: [32 ... 8159 ], or in binary form: [ 0000000100000 ... 1111111011111 ]. In this embodiment, the upper eight (8) most significant bits thus avoid containing all zero values, or all one values. The corresponding unavailability of 64 possible code values, out of almost 8200, may be substantially insignificant. Similarly, referring to FIG. 7C, in some embodiments, the u' and v' signals can be limited to a range of [4 ... 1019 ] or in binary, [ 0000000100 ... 1111111011 ]. Furthermore, for the cases of FIGS. 7A, 7B, and 7C, in order to avoid all 0s or all 1s, the least significant bit of the odd channel v' and u' data, respectively, is mapped to the next to least significant bits of the odd $C_r$ or R channel and even pixel $C_b$ or B channel, respectively, which the complement of the least significant bit of the odd channel v' and u' data, respectively, is mapped to the least significant bits of the odd $C_r$ or R channel and even pixel $C_b$ or B channel, respectively.

**VDR over SDI Interfaces**

The standard Serial Digital Interface (SDI) provides 20 bits per pixel for $YC_bC_r$ 4:2:2 format signals, i.e., that include 2:1 horizontal subsampling. The first 20 bits include 10 bits for odd pixel $Y$ values and 10 bits for $C_b$ values that because of the 2:1 subsampling are application to both odd and even pixels, although denoted with subscript 0. The immediately following 20 bits include 10 bits for even pixel $Y$ values and 10 bits for $C_r$ values that because of the 2:1 subsampling are application to both odd and even pixels, although denoted with subscript 0.

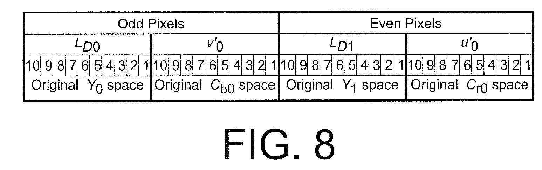

FIG. 8 shows an example of packing VDR data in a legacy SDI interface. In such example, the VDR uses 10 bits used for $L_D$; 10 bits used for each of $u'$ and v' with 2:1 horizontal subsampling of the $u'$ and $v'$ digital signals. Hence the VDR data packed into a single DSI channel uses 20 bits per pixel in $L_D$ $u'$ v' 4:2:2 format.

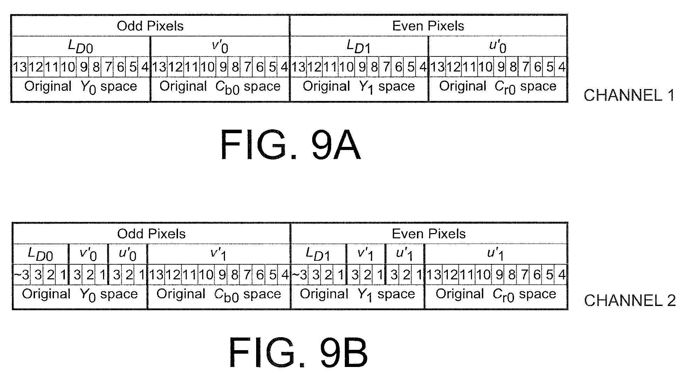

In another example, dual SDI channels are used to transport $L_D$ $u'$ $v'$ VDR data in non-subsampled 4:4:4 format. With two SDI channels available, 40 bits per pixel are available. In one example, 13 bits are used for each quantized VDR component $L_D$, $u'$, and $v'$, and the remaining 1-bit is used to ensure that illegal values are not used. FIGS. 9A and 9B show one example of the bit allocation of 39 bits per pixel for two consecutive pixels into a first and a second SDI container for the two channels used to transport a 39-bit per pixel VDR signal.

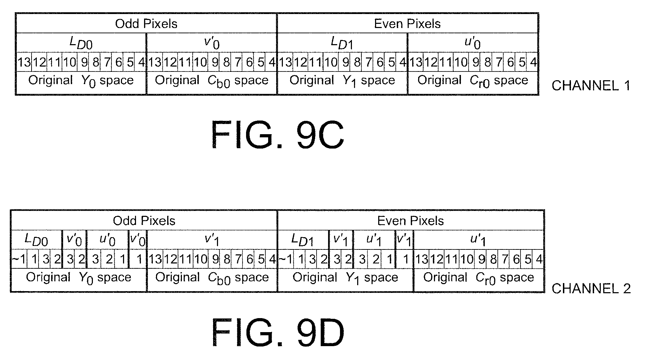

FIGS. 9C and 9D show an alternate example of the bit allocation of 39 bits per pixel for two consecutive pixels into a first and a second SDI container for the two channels used to transport a 39-bit per pixel VDR signal according to another example. In this alternate example, the arrangement of the bits of the second channel shown in FIG. 9D is different than that shown in FIG. 9B. In particular, the bits are arranged to align with some existing 12 bit packing methods for other types signals, in particular, the 12 most significant bit locations are arranged to correspond with bit locations of existing 12-bit SMPTE standards, so that the difference between the bit allocations in FIG. 9B and FIG. 9D is in the manner in which the least significant bits are arranged.

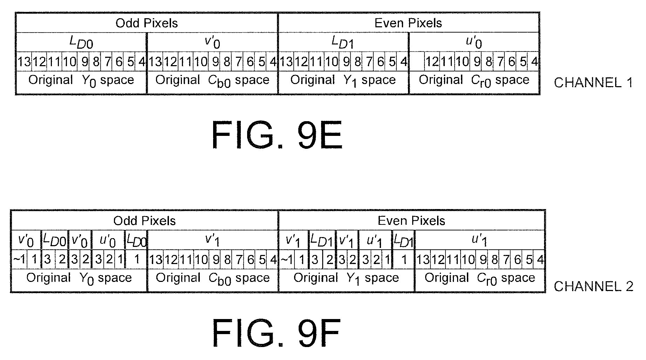

FIGS. 9E and 9F show yet another alternate example of bit allocation of the data of two consecutive pixels into a first and a second SDI container for two channels used to transport a VDR signal according to another example. This arrangement new version also lines up the 12 most significant bit locations to correspond with bit locations of existing 12-bit SMPTE standards. FIG. 9F differs from FIG. 9D in the lowest order bit of the $L_D$ values and the lowest order bit of the v' signal. This arrangement takes into consideration that in practice, small changes in v' may be less visible than small changes in $L_D$.

*Transmission of VDR signals over HDMI interfaces.*

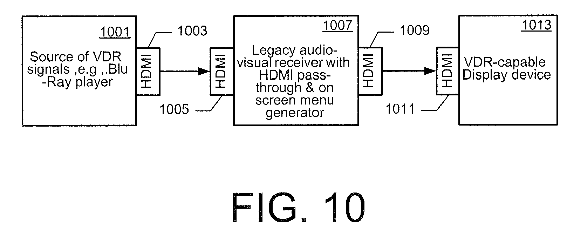

Embodiments of the present invention may be used in situations wherein a legacy device creates on-screen display (on-screen display) data within a system milieu in which extended dynamic range information is transported with a legacy media interface, such as HDMI. FIG. 10 depicts an example system that includes a high dynamic range display and an example legacy component. A source of VDR signals-in this example a VDR signal capable Blu-Ray disc player 1001 that has an output HDMI interface 1003 is communicatively coupled via HDMI with a legacy audio-visual receiver 1007 that includes an HDMI input interface 1005, and HDMI switching or HDMI pass-though, so that the HDMI signal via HDMI interface 1005 is passed though to an output HDMI

interface 1009. The legacy audio-visual receiver 1007 is communicatively coupled via its output HDMI interface 1009 with a VDR signal capable display 1013 that has an input HDMI interface 1011. The source of VDR signals-in this example a VDR signal capable Blu-Ray disc player 1001 uses one of the VDR to HDMI signal assignments shown above and the VDR signal capable display 1013 accepts such VDR data that is mapped into HDMI signals. Hence, a VDR signal that output from the Blu-Ray disc player 1001 and properly displayed on the display 1013. As is common for such devices, the audio-visual receiver 1007 may include an on-screen display source and functions to overlay on-screen display information in a legacy format, e.g., encoded in the standard HDMI formats that conform to HDMI $YC_bC_r$ (4:4:4 or 4:2:2) or HDMI *RGB* 4:4:4, essentially on top of the VDR signal from the Blu-Ray disc player 1001.

Some embodiments of the present invention may function such that the on-screen display information from the legacy device-the receiver 1007-can be viewable on the VDR-capable display device 1013. Consider as an example the 13-bit $L_D$ and 10-bit $u'$ and v' representation of FIG. 7C, and suppose, as an example, that the receiver 1007 outputs the on-screen display data in HDMI *RGB* 4:4:4. What the VDR signal capable display 1013 expects to be the most significant bits of $L_D$ data now include, e.g., as an overlay, the green overlay signal. What the VDR signal capable display 1013 expects to be the most significant bits of $u'$ data now include, e.g., as an overlay, the red overlay signal, and what the VDR signal capable display 1013 expects to be the most significant bits of or v' data now include, e.g., as an overlay, the blue overlay signal. What the VDR signal capable display 1013 expects as lower significant bits of $L_D$ and $u'$ or $L_D$ and v' - depending on whether the pixel is an even or odd pixel-now include, e.g., as an overlay, the blue or red overlay signal, depending on whether the pixel is an even or odd pixel. In this manner, the on-screen display from a legacy device, e.g., from audio-visual receiver 1007 is still viewable, albeit in altered in color and contrast. However, the overlay information remains viewable. The viewability of the on-screen display information provided with an embodiment under these conditions allows the operator to view, assess and control audio-visual receiver 1007.

*Extended Dimensionality Embodiments*

Also other video information may be encoded, such as 3D video, for effective transmission over legacy media.

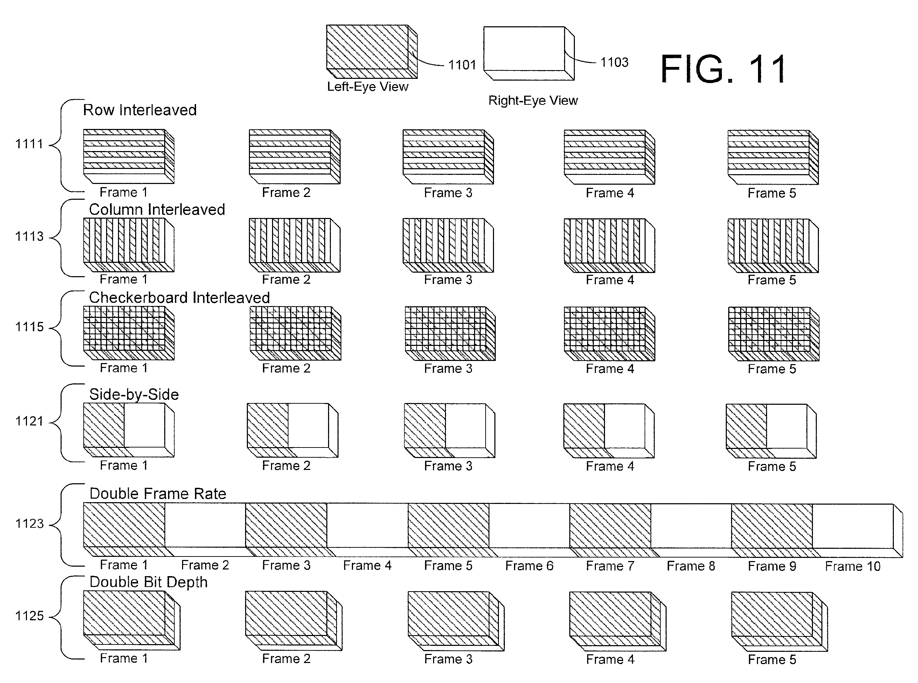

FIG. 11 depicts example methods for delivery of signals encoding 3D content over a legacy interface. Some examples include encoding two effectively simultaneous video streams to fit within an HDMI pipeline, and may thus transport a stereoscopic pair comprising left-eye video data 1101 and right-eye video data 1103 for 3D video viewing over a legacy media interface. In some examples, data interleaving techniques create the stereo video streams. In some examples, the stereo streams are created with a doubling of frame rate. In some examples, doubling the bit depth using deep color modes is used to create the stereo streams. FIG. 11 illustrates and provides a comparison of these methods.

In some examples, use of data interleaving maintains the original frame rate of a video sequence, with a reduction in the spatial detail of the signal. This provides for both left-eye view 1101 and right-eye views 1103 to be merged into one frame. Examples may use row interleaving 1111 (or techniques that may, in some sense, share some similarity with interlacing), column interleaving 1113, or checkerboard interleaving 1115 to effectively represent an extended dimensionality signal, which may comprise 3D video. Some examples may, additionally or alternatively, represent an extended dimensionality signal such as 3D video with side-by-side interleaving 1121. Side-by-side interleaving 1121 may be implemented in a horizontal configuration or a vertical, e.g., over/under frame configuration.

Some examples may effectuate a 3D video signal with multiple, e.g., double bit depth 1125. Embodiments may effectively package extended dimensionality signals simultaneously with extended dynamic range signals in the same legacy media interface data spaces. Some examples may thus preserve the full spatial detail of a video signal. A higher clock rate may be used to achieve such preservation.

Some examples may include double the frame rate data 1123 of an original video sequence, to effectively transmit the left-eye frame 1101 and the right-eye frame 1103 consecutively. Some examples may thus preserve the full spatial detail of a video signal. A higher clock rate may be used to achieve such preservation. For an example 30Hz original video sequence, the present example may use a 60Hz combined left frame 1101/right frame 1103 stream that conforms to an HDMI recognized format.

For original sequences of 24Hz, 50Hz, or 60Hz, examples can effectively function with 48Hz, 100Hz, and 120Hz clock rates, respectively. While these rates remain undefined at this time for video formats in HDMI, none of them exceed the maximum HDMI rate, and it should be appreciated that embodiments are well suited to function therewith to achieve such format/frame rate combinations.

Some examples function with activation of a 48 bit deep color, e.g., double or other multiple bit depth mode 1125, according to the HDMI standard version at least HDMI 1.3a to preserve the full spatial detail of a video signal. Left-eye image data 1101 could be placed in the upper 24 bits of each pixel, and the right-eye image data 1103 could be placed in the lower 24 bits of each pixel. Drawing on deep color support from hardware, e.g., Blu-Ray player 1001, HDR display 1013 (see FIG. 10, modified for stereo data rather than or in addition to VDR data), some examples effectively encode full bandwidth 3D video at higher high dynamic range frame rates to fit within the space available over current standard HDMI or other legacy interfaces.

Additionally or alternatively, an embodiment may function to provide for delivery of signals encoding 3D content over a legacy interface with other than checkerboard type interleaving. For example, 3D video content may be encoded with side-by-side interleaving 1121, with or without synchronizing lines, and mapped to the legacy media interfaces. Moreover, some embodiments may map 3D video content that may be converted between two or more of the methods shown in FIG 11.

Example techniques and others with which embodiments of the present invention may function are described in one or more of the following co-pending United States Provisional Patent Applications:

- United States Provisional Patent Application No. 61/082217, filed on 20 July 2008 by Husak, Ruhoff, Tourapis and Leontaris, titled COMPATIBLE STEREOSCOPIC VIDEO DELIVERY, and International Application No. PCT/US2009/050809 designating the United States.

- United States Provisional Patent Application No. 61/082220, filed on 20 July 2008 by Tourapis, Husak, Leontaris and Ruhoff, titled ENCODER OPTIMIZATION OF STEREOSCOPIC VIDEO DELIVERY SYSTEMS, and International Application No. PCT/US2009/050815 designating the United States.

- United States Provisional Patent Application No. 61/191,416, filed on 7 September 2008 by Pehalawatta and Tourapis, titled COLOR CORRECTION OF CHROMA SUBSAMPLED STEREOSCOPIC INTERLEAVED IMAGES, and International Application No. PCT/US2009/055819 designating the United States.

- United States Provisional Patent Application No. 61/099,542, filed on 23 September 2008 by Tourapis, Leontaris and Pehalawatta, titled ENCODING AND DECODING ARCHITECTURE OF CHECKERBOARD MULTIPLEXED IMAGE DATA), and International Application No. PCT/US2009/056940 designating the United States.

- United States Provisional Patent Application No. 61/140,886, filed on 25 December 2008 by Pehalawatta, Tourapis and Leontaris, titled CONTENT-ADAPTIVE SAMPLING RATE CONVERSION FOR CHECKERBOARD INTERLEAVING OF STEREOSCOPIC IMAGES.

- United States Provisional Patent Application No. 61/143,087, filed on 7 January 2009 by inventors Tourapis and Pehalawatta, titled CONVERSION, CORRECTION, AND OTHER OPERATIONS RELATED TO MULTIPLEXED DATA SETS.

*Example Processes*

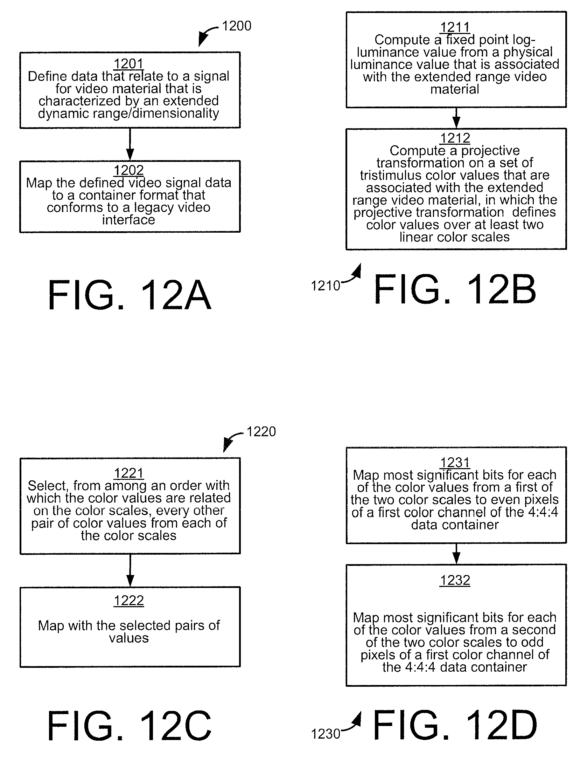

FIG. 12A, FIG. 12B, FIG. 12C and FIG. 12D respectively depict flowcharts for example procedures 1200, 1210, 1220 and 1230, according to embodiments of the present invention. With reference to FIG. 12A for example method 1200, in step 1201, data are defined, which relate to a signal for video material that is characterized by an extended dynamic range. In step 1202, the defined video signal data is mapped to a container format that conforms to a legacy video interface. The extended dynamic range video signal data are thus transportable over the legacy media interface.

With reference to FIG. 12B for example method 1210, a brightness component of the video signal data is represented on a logarithmic scale and two (2) color components of the video signal data are each represented on a linear scale. In step 1211, a fixed point log-luminance value is computed from a physical luminance value that is associated with the extended range video material. In step 1212, a transformation is computed on a set of component color values that are associated with the extended range video material. The transformation may define color values over at least two linear color scales. The component color values may correspond to a CIE *XYZ* color space. Two linear color scales may each correspond respectively to coordinates in a ($u'$, $v'$) color space.

Some embodiments may thus function with data relating to a brightness component of a video signal represented over a logarithmic scale and with data relating to at least two color components each represented on a separate linear scale. It should be appreciated that alternative or additional embodiments may function with the data relating to the brightness component encoded represented over other than a logarithmic scale. For example, the brightness component may be represented in some embodiments with a power related transfer function, e.g., with Y raised to some fractional power. Also for example, the brightness component may be represented by values from a lookup table of perceptually modeled brightness values. The perceptually based lookup table may be computed or compiled from data derived experimentally in relation to the HVS. Moreover, some embodiments may, alternatively or additionally, function with the data relating to one or more of the color components represented over other than a linear scale. For example one or more of the color components may be represented in some embodiments with a power related transfer function or a perceptually based lookup table of color values.

With reference to FIG. 12C, in method 1220, log-luminance values and multiple color values from each of the two color scales may be mapped to a 4:2:2 data container, which conforms to a format associated with the legacy video media. In step 1221, every other pair of color values from each of the color scales are selected, from among an order with which the color values are related on the color scales. In step 1222, the mapping is performed with the selected pairs of values.

With reference to FIG. 12D, in method 1230, the log-luminance values are mapped to a luma related channel of a 4:4:4 data container, which conforms to a format associated with the legacy video media. In step 1231, the most significant bits (MSBs) for each of the color values from a first of the two color scales are mapped to even pixels of a first color channel of the 4:4:4 data container. The MSBs for each of the color values from a second of the two color scales may be mapped to odd pixels of a second color channel of the 4:4:4 data container.

Upon receipt at a display that has a capability of rendering material encoded as VDR and/or 3D according to one of the embodiments described herein via a legacy media interface, the video signal data is decodable to effectively render the VDR and/or 3D VDR extended range video material on the 3D or VDR-rendering capable display. Moreover, upon receipt via a legacy media interface at a display that lacks a capability of rendering extended dynamic range material such as 3D or VDR data, the video signal data is decodable to visibly render the video content at the display's dynamic range, which may be narrower than the dynamic range displayable on VDR-rendering capable display, but will still be visible. The extended dynamic range may include VDR data and/or three dimensional video content. The legacy media interface may include High Definition Multimedia Interface (HDMI), Digital Visual Interface (DVI) Serial Digital Interface (SDI), and/or DisplayPort interfaces, among others.

Embodiments of the present invention relate to methods for delivery of extended dynamic range and related signals via legacy video interfaces. Embodiments may relate to systems, apparatus such as encoders, computers and computer monitors, television receivers, displays, player devices and the like, computer readable storage media, software encoded thereon, and integrated circuit (IC) devices. The IC devices may include application specific ICs and programmable logic devices (PLDs) such as microcontrollers and field programmable gate arrays (FPGAs) or dedicated digital signal processing device (DSP device) ICs.

Thus, embodiments transport extended dynamic range video such as VDR and similar data, e.g., 32 to 36-bit data over 24 bit legacy interfaces. The higher bit depth VDR and other extended dynamic range signals are encoded in compatibility with the operating modes of HDMI and other legacy interfaces. Embodiments achieve this compatibility independent of any particular metadata requirement. Embodiments encode and package video signals to tolerate some compression techniques, such as may relate to transmission of HDMI or similar data over a wireless link. Embodiments allow robust operation with legacy devices, which lack inherent VDR capabilities.

VDR signals that are repackaged or encoded according to embodiments are viewable on legacy display devices that lack VDR capability. Moreover, embodiments function to allow standard on-screen menus that may be created by legacy processing devices to be viewable on VDR displays. Embodiments may thus promote a measure of backward compatibility, which may be useful in a transition period prior to widespread VDR processing availability.

Embodiments also allow for sending two streams of HDR and/or other extended dynamic range data on an HDMI interface, which allow for future expansion with this packaging method. Embodiments cover visual dynamic range (VDR) and 3D aspects of a video signal simultaneously, on a standard HDMI or other legacy interface. Thus, embodiments provide major enhancements to standard video, which may be implemented without replacing existing HDMI or other legacy interface infrastructures.

*Example processing system platform*

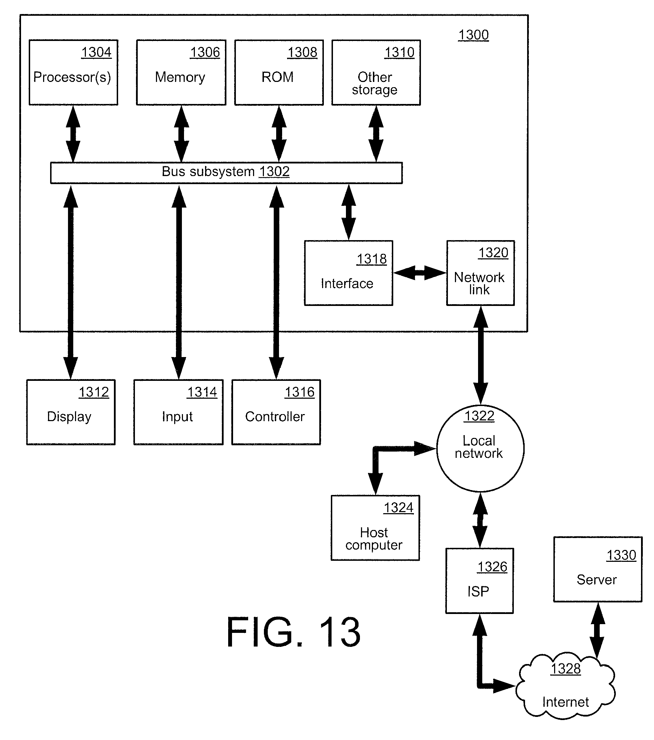

FIG. 13 depicts an example processing system 1300, with which some embodiments of the present invention may be implemented. Processing system 1300 includes a bus subsystem 1302 shown here as a simple but which would any communication mechanism for communicating information between the various elements, and one or more processors 1304 coupled to bus subsystem 1302 for processing information. Processing system 1300 also includes a main memory 1306, such as a random access memory (RAM) or other storage subsystem, coupled to bus subsystem 1302 for storing information and furthermore for storing instructions to be executed by processor(s) 1304. Main memory 1306 also may be used for storing temporary variables or other intermediate information during execution of instructions to be executed by processor(s) 1304 as would be familiar to those having skill in the art. Processing system 1300 further may include a read only memory (ROM) 1308 or other storage subsystem coupled to bus subsystem 1302 for storing static information and instructions for processor(s) 1304. One or more other storage devices 1310, such as one or more magnetic disks or optical disks, may be provided and coupled to bus subsystem 1302 for storing information and instructions.

Embodiments of the invention relate to the use of processing system 1300 for delivery of extended dynamic range, extended dimensionality image and related signals via legacy video interfaces. According to one embodiment of the invention, rewriting queries with remote objects is provided by processing system 1300 in response to processor(s) 1304 executing one or more sequences of one or more instructions contained in one or more of the storage elements, e.g., in main memory 1306. Such instructions may be read into main memory 1306 from another computer-readable medium, such as storage device(s) 1310. Execution of the sequences of instructions contained in main memory 1306 causes processor(s) 1304 to perform the process steps described herein. One or more processors in a multi-processing arrangement may also be employed to execute the sequences of instructions contained in main memory 1306. In alternative embodiments, hard-wired circuitry may be used in place of or in combination with software instructions to implement the invention. Thus, embodiments of the invention are not limited to any specific combination of hardware circuitry and software.

Processing system 1300 may be coupled via bus subsystem 1302 to a display 1312, such as a liquid crystal display (LCD), plasma display, cathode ray tube (CRT), organic light emitting display (OLED), or the like, for displaying information to a computer user. In some embodiments, one or more input devices 1314, which may include alphanumeric and other keys, is coupled to bus subsystem 1302 for communicating information and command selections to processor(s) 1304. Another type of user input device is cursor control 1316, such as a mouse, a trackball, or cursor direction keys for communicating direction information and command selections to processor(s) 1304 and for controlling cursor movement on display 1312. Such input devices may have two or more degrees of freedom in two or more corresponding axes, a first axis, e.g., x- and a second axis, e.g., y-, that allows the device to specify positions in a plane.

The term "computer-readable medium" as used herein refers to any medium that participates in storing and providing instructions to processor(s) 1304 for execution. Such a medium may take many forms, including but not limited to any form of a storage device, including non-volatile storage media and volatile storage media. Non-volatile media includes, for example, optical or magnetic disks, such as storage device(s) 1310. Volatile media includes dynamic memory, such as main memory 1306. Common forms of computer-readable media include, for example, a floppy disk, a flexible disk, hard disk, magnetic tape, or any other magnetic medium, a CD-ROM, any other optical medium, punch cards, paper tape, any other legacy or other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor(s) 1304 for execution. For example, the instructions may initially be carried on a magnetic disk of a remote computer. The remote computer can load the instructions into its dynamic memory and send the instructions over a telephone line using a modem. A modem local to processing system 1300 can receive the data on the telephone line and use an infrared transmitter to convert the data to an infrared signal. An infrared detector coupled to bus subsystem 1302 can receive the data carried in the infrared signal and place the data on bus subsystem 1302. Bus subsystem 1302 carries the data to main memory 1306, from which processor(s) 1304 retrieves and executes the instructions. The instructions received by main memory 1306 may optionally be stored on storage device 1310 either before or after execution by processor(s) 1304.

Processing system 1300 may also include one or more communication interfaces 1318 coupled to bus subsystem 1302. Communication interface 1318 provide(s) two-way data communication coupling to a network link 1320 that is connected to a local network 1322. For example, communication interface(s) 1318 may include an integrated services digital network (ISDN) interface or a digital subscriber line (DSL), cable or other modem to provide a data communication connection to a corresponding type of telephone line. As another example, communication interface(s) 1318 may include a local area network (LAN) interface to provide a data communication connection to a compatible LAN. One or more wireless links may also be included. In any such implementation, communication interface(s) 1318 send(s) and receive(s) electrical, electromagnetic or optical signals that carry digital data streams representing various types of information.

Network link(s) 1320 typically provides data communication through one or more networks to other data devices. For example, network link(s) 1320 may provide a connection through local network 1322 to a host computer 1324 or to data equipment operated by an Internet Service Provider (ISP) 1326. ISP 1326 in turn provides data communication services through the worldwide packet data communication network now commonly referred to as the "Internet" 1328. Local network 1322 and Internet 1328 both use electrical, electromagnetic or optical signals that carry digital data streams. The signals through the various networks and the signals on network link 1320 and through communication interface 1318, which carry the digital data to and from processing system 1300, are exemplary forms of carrier waves transporting the information.

Processing system 1300 can send messages and receive data, including program instructions, through the network(s), network link 1320 and communication interface 1318. For example, communication interface 1318 may send video signals encoded with processing system 1300 via one or more interface media, including legacy media such as HDMI, SDI or the like. In the Internet example, a server 1330 might transmit requested instructions for an application program through Internet 1328, ISP 1326, local network 1322 and communication interface 1318. In accordance with the invention, one such downloaded application provides for delivery of visual dynamic range, extended dimensionality image and related signals via legacy video interfaces, as described herein.

The received instructions may be executed by processor(s) 1304 as it is received, and/or stored in storage device 1310, or other non-volatile storage for later execution.

*Example IC Platform Implementation*

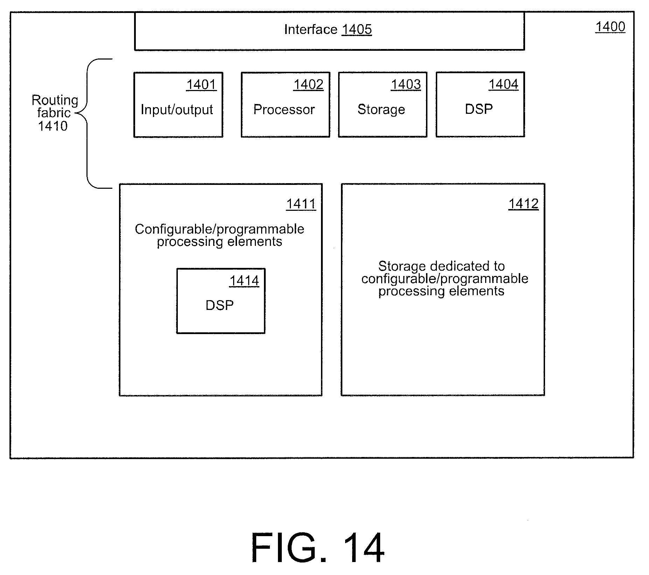

FIG. 14 depicts an example integrated circuit (IC) device 1400, with which some embodiments of the present invention may be implemented. IC device 1400 may have an input/output feature 1401. I/O feature 1401 receives input signals and routes them via routing fabric 1410 to a processing unit 1402, which functions with storage 1403. Input/output feature 1401 also receives output signals from other component features of IC device 1400 and may control a part of the signal flow over routing fabric 1410.

A digital signal processing device (DSP device) feature 1404 performs at least one function relating to digital signal processing. An interface 1405 accesses external signals and routes them to input/output feature 1401, and allows IC device 1400 to export signals. Routing fabric 1410 routes signals and power between the various component features of IC device 1400.

Configurable and/or programmable processing elements 1411, such as arrays of logic gates may perform dedicated functions of IC device 1400, which in some embodiments may relate to extracting and processing media fingerprints that reliably conform to media content. Storage 1412 dedicates sufficient memory cells for configurable and/or programmable processing elements 1411 to function efficiently. Configurable and/or programmable processing elements may include one or more dedicated DSP device features 1414.

IC 1400 may be implemented as a programmable logic device such as a field programmable gate array (FPGA) or microcontroller, or another configurable or programmable device. IC 1400 may also be implemented as an application specific IC (ASIC) or a dedicated DSP device. Formats for encoding video and audio signals to allow their transport over media interfaces, including legacy media such as HDMI, VDI or the like, may be stored or programmed into IC 1400, e.g., with storage feature 1403.

Unless specifically stated otherwise, as apparent from the following description, it is appreciated that throughout the specification discussions using terms such as "processing," "computing," "calculating," "determining" or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

Note that when a method is described that includes several elements, e.g., several steps, no ordering of such elements, e.g., steps is implied, unless specifically stated.

In some embodiments, a computer-readable storage medium is configured with, e.g., encoded with instructions that when executed by one or more processors of a processing system such as a digital signal processing device or subsystem that includes at least one processor element and a storage subsystem, cause carrying out a method as described herein.

While the computer readable medium is shown in an example embodiment to be a single medium, the term "medium" should be taken to include a single medium or multiple media, e.g., several memories, a centralized or distributed database, and/or associated caches and servers, that store the one or more sets of instructions.

It will also be understood that embodiments of the present invention are not limited to any particular implementation or programming technique and that the invention may be implemented using any appropriate techniques for implementing the functionality described herein. Furthermore, embodiments are not limited to any particular programming language or operating system.

Reference throughout this specification to "one embodiment" or "an embodiment" means that a particular feature, structure or characteristic described in connection with the embodiment is included in at least one embodiment of the present invention. Thus, appearances of the phrases "in one embodiment," "in some embodiments" or "in an embodiment" in various places throughout this specification are not necessarily all referring to the same embodiment, but may. Furthermore, the particular features, structures or characteristics may be combined in any suitable manner, as would be apparent to one of ordinary skill skilled in the art from this disclosure, in one or more embodiments.

Similarly it should be appreciated that in the above description of example embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment.

Furthermore, while some embodiments described herein include some but not other features included in other embodiments, combinations of features of different embodiments are meant to be within the scope of the invention, and form different embodiments, as would be understood by those skilled in the art.

Furthermore, some of the embodiments are described herein as a method or combination of elements of a method that can be implemented by a processor of a processing system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

As used herein, unless otherwise specified, the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

Any discussion of prior art in this specification should in no way be considered an admission that such prior art is widely known, is publicly known, or forms part of the general knowledge in the field.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting of only elements A and B. Any one of the terms including or which includes or that includes as used herein is also an open term that also means including at least the elements/features that follow the term, but not excluding others. Thus, including is synonymous with and means comprising.

Similarly, it is to be noticed that the term coupled, when used in the claims, should not be interpreted as being limitative to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

## Claims

1.  A method comprising:

    accepting data that represents color components of a picture element;
    in the case that the color components are not in a device independent color space,
    converting the color components to values in a device independent color space;
    converting the values in the device independent color space to visual dynamic range (VDR) data represented by three variables denoted $L_D$, u', and v', wherein, for $L_D$ in the range [0,1],

    $$L_D = \alpha \left( \log_2 Y \right) + \beta \,,$$

    with $Y$ denoting the value of luminance value in cd/m$^2$ in the CIE-1931 $XYZ$ color space corresponding to the values in the device independent color space, $\alpha$ denoting a scale parameter, and $\beta$ denoting a bias parameter, and wherein
    u' and v' are the chrominance values in the CIE-1976 luminance-chrominance color space corresponding to the values in the device independent color space; and
    quantizing the $L_D$, u', and v' values to a digital $L_D$ value of a first number of bits, denoted $n$ and to digital u' and v' values each of a second number of bits, denoted $m$,
    wherein n is at least 10, m is at least 10, $\alpha$ =77/2048 and $\beta$ =1/2, such that

    $$L_D = \frac{77}{2048} (\log_2 Y) + \frac{1}{2} \,,$$

    wherein the $n$-bit digital $L_D$ value denoted $D'_L$ and $m$-bit digital u' and v' values expressed as integers denoted $D'_u$ and $D'_v$, respectively, are

    $$D'_L = \mathrm{INT}\left[ (253 L_D + 1) \cdot 2^{n-8} \right]$$

    $$D'_u = \mathrm{INT}\left[ (Su' + B) \cdot 2^{m-8} \right]$$

    and

    $$D'_v = \mathrm{INT}\left[ (Sv' + B) \cdot 2^{m-8} \right],$$

    with parameter S = 406 + 43/64 and parameter $B$ = 35/64, and INT[·] being an integer function that rounds any number, including rounding up to the next highest integer value any number with a fractional part greater or equal to 0.5, and rounding down any number with a fractional part less than 0.5.

2.  The method as recited in claim 1, wherein the second number of bits m is at least 11.

3. The method as recited in claim 1, wherein each of the first number of bits n and the second number of bits *m* is at least 11.

4. The method as recited in any of claims 1 to 3, wherein the accepted data is part of video data, and wherein the quantized luminance related values and the quantized chrominance related values are at the same spatial resolution, such that on average there are *n + 2m* bits per pixel of VDR data.

5. The method as recited in any of claims 1 to 3, wherein the accepted data is part of video data, and wherein the quantized chrominance related values are at half the horizontal spatial resolution of the quantized luminance related values, such that on average there are *n+m* bits per pixel of VDR data.

6. The method as recited in any of claims 1 to 5,
wherein the visual dynamic range (VDR) video data, represented by the digital $L_D$, u' and v'values, includes visual dynamic range (VDR) video signal data, the method further comprising:

mapping the accepted video signal data to a container format that conforms to a legacy video interface;
wherein the visual dynamic range data is transportable over the legacy media interface.

7. The method as recited in any of claims 1 to 6, wherein the video data comprises extended dimensionality video material, and wherein, for the extended dimensionality video material, the mapping of the visual dynamic range (VDR) video signal data to the container format comprises:

simultaneously encoding a pair of image components that respectively conform to a left eye view and a right eye view of the video material; and
interleaving the pair of image components into a stereoscopically merged image frame, for example by:

row interleaving;
column interleaving;
checkerboard interleaving; or
side-by-side interleaving.

8. The method as recited in claim 7, wherein the encoding step further comprises the step of increasing the frame rate of the original video signal, and wherein the interleaving step preserves a degree of spatial detail that is associated with the original video signal within the stereoscopically merged image frame.

9. A system, configured to perform the method of any of claims 1 to 8.

10. A software program including instructions for performing the method steps of any of claims 1 to 8 when executed by a computer.

**Patentansprüche**

1. Verfahren, das Folgendes umfasst:

Empfangen von Daten, die Farbkomponenten eines Bildelements darstellen;
in dem Fall, in dem sich die Farbkomponenten nicht in einem geräteunabhängigen Farbraum befinden, Konvertieren der Farbkomponenten in Werte eines geräteunabhängigen Farbraums;
Konvertieren der Werte des geräteunabhängigen Farbraums in Daten eines visuellen Dynamikbereichs (VDR), die durch drei Variablen, bezeichnet als $L_D$, u' und v', dargestellt werden, wobei für $L_D$ in dem Intervall [0,1] Folgendes gilt:

$$L_D = \alpha\left(\log_2 Y\right) + \beta ,$$

wobei Y den Wert des Luminanzwertes in cd/m$^2$ in dem CIE-1931 *XYZ*-Farbraum entsprechend den Werten des geräteunabhängigen Farbraums bezeichnet, $\alpha$ einen Skalierungsparameter bezeichnet und $\beta$ einen Vor-

spannungsparameter bezeichnet, und wobei

u' und v' die Chrominanzwerte in dem CIE-1976 Luminanz-Chrominanz-Farbraum sind, die den Werten des geräteunabhängigen Farbraums entsprechen; und

Quantisieren der Werte von $L_D$, u' und v' in einen digitalen Wert von $L_D$ mit einer ersten Anzahl von Bits, die mit n bezeichnet bezeichnet wird, und in digitale Werte von u' und v' mit jeweils einer zweiten Anzahl von Bits, die mit m bezeichnet werden,

wobei n mindestens 10 ist, m mindestens 10 ist, $\alpha$ =77/2048 und $\beta$ =1/2, so dass

$$L_D = \frac{77}{2048}(\log_2 Y) + \frac{1}{2}$$

gilt, wobei der digitale $L_D$-Wert mit n Bits, bezeichnet als $D'_L$ , und die digitalen u'- und v'-Werte mit m Bits, die als ganze Zahlen ausgedrückt werden, bezeichnet als $D'_u$ bzw. $D'_v$ , gegeben sind durch

$$D'_L = \mathrm{INT}\left[(253L_D + 1) \cdot 2^{n-8}\right]$$

$$D'_u = \mathrm{INT}\left[(Su' + B) \cdot 2^{m-8}\right]$$

und

$$D'_v = \mathrm{INT}\left[(Sv' + B) \cdot 2^{m-8}\right],$$

mit dem Parameter S = 406 + 43/64 und dem Parameter B = 35/64, wobei INT[·] eine ganzzahlige Funktion ist, die jede Zahl rundet und die das Aufrunden einer beliebigen Zahl mit einem Bruchteil, der größer oder gleich 0,5 ist, auf den nächst größeren ganzzahligen Wert und das Abrunden einer beliebigen Zahl mit einem Bruchteil kleiner als 0,5 enthält.

2.  Verfahren nach Anspruch 1, wobei die zweite Bitanzahl m mindestens 11 beträgt.

3.  Verfahren nach Anspruch 1, wobei sowohl die erste Bitanzahl n als auch die zweite Bitanzahl m mindestens 11 beträgt.

4.  Verfahren nach einem der Ansprüche 1 bis 3, wobei die empfangenen Daten einem Teil von Videodaten entsprechen und wobei die quantisierten luminanzbezogenen Werte und die quantisierten chrominanzbezogenen Werte dieselbe räumliche Auflösung aufweisen, so dass im Durchschnitt n + 2m Bits pro Pixel der VDR-Daten vorhanden sind.

5.  Verfahren nach einem der Ansprüche 1 bis 3, wobei die empfangenen Daten einem Teil von Videodaten entsprechen und wobei die quantisierten chrominanzbezogenen Werte die Hälfte der horizontalen räumlichen Auflösung der quantisierten luminanzbezogenen Werte aufweisen, so dass im Durchschnitt n + m Bits pro Pixel der VDR-Daten vorhanden sind.

6.  Verfahren nach einem der Ansprüche 1 bis 5,
    wobei die Videodaten des visuellen Dynamikbereichs (VDR), die durch die digitalen Werte $L_D$, u' und v' dargestellt werden, Videosignaldaten des visuellen Dynamikbereichs (VDR) enthalten, wobei das Verfahren ferner Folgendes umfasst:

    Abbilden der empfangenen Videosignaldaten in ein Containerformat, das einer herkömmlichen Videoschnittstelle entspricht;
    wobei die Daten des visuellen Dynamikbereichs über die herkömmliche Medienschnittstelle transportiert werden können.

**7.** Verfahren nach einem der Ansprüche 1 bis 6, wobei die Videodaten Videomaterial mit erweiterter Dimensionalität umfassen und wobei für das Videomaterial mit erweiterter Dimensionalität das Abbilden der Videosignaldaten des visuellen Dynamikbereichs (VDR) auf das Containerformat Folgendes umfasst:

gleichzeitiges Codieren eines Paares von Bildkomponenten, die jeweils einer linke-Auge-Ansicht und einer rechte-Auge-Ansicht des Videomaterials entsprechen; und
Verschachteln des Paares von Bildkomponenten in einen stereoskopisch zusammengefassten Bildrahmen, z. B. durch:

Zeilenverschachtelung;
Spaltenverschachtelung;
Schachbrettverschachtelung; oder
Seite-an-Seite-Verschachtelung.

**8.** Verfahren nach Anspruch 7, wobei der Codierungsschritt ferner den Schritt des Erhöhens der Bildrate des ursprünglichen Videosignal umfasst und wobei der Verschachtelungsschritt innerhalb des stereoskopisch zusammengefassten Bildrahmens ein Ausmaß des räumlichen Details erhält, das dem ursprünglichen Videosignal zugeordnet ist.

**9.** System, das konfiguriert ist, das Verfahren nach einem der Ansprüche 1 bis 8 durchzuführen.

**10.** Softwareprogramm, das Anweisungen zum Durchführen der Verfahrensschritte nach einem der Ansprüche 1 bis 8 enthält, wenn es von einem Computer ausgeführt wird.


**Revendications**

**1.** Procédé comprenant :

l'acceptation de données qui représentent des composantes de couleur d'un élément d'image ;
dans le cas où les composantes de couleur ne se trouvent pas dans un espace chromatique indépendant du dispositif, la conversion des composantes de couleur en des valeurs dans un espace chromatique indépendant du dispositif ;
la conversion des valeurs dans l'espace chromatique indépendant du dispositif en données de gamme dynamique visuelle (VDR) représentées par trois variables désignées $L_D$, $u'$ et $v'$, où pour $L_D$ dans la gamme [0,1],

$$L_D = \alpha\left(\log_2 Y\right) + \beta \ ,$$

où $Y$ désigne la valeur de luminance en cd/m$^2$ dans l'espace chromatique *XYZ* CIE-1931 correspondant aux valeurs dans l'espace chromatique indépendant du dispositif, $\alpha$ désigne un paramètre d'échelle, et $\beta$ désigne un paramètre de biais, et dans lequel $u'$ et $v'$ sont les valeurs de chrominance dans l'espace chromatique luminance-chrominance CIE-1976 correspondant aux valeurs dans l'espace chromatique indépendant du dispositif ; et
la quantification des valeurs $L_D$, $u'$ et $v'$ en une valeur numérique $L_D$ d'un premier nombre de bits, désigné *n* et en valeurs numériques $u'$ e $v'$ ayant chacune un second nombre de bits, désigné *m,*
où n est au moins 10, m est au moins 10, $\alpha$ = 77/2048 et $\beta$ = 1/2, de telle sorte que

$$L_D = \frac{77}{2048}\left(\log_2 Y\right) + \frac{1}{2} \ ,$$

où la valeur numérique $L_D$ de n bits désignée $D_L'$ et les valeurs numériques $u'$ et $v'$ de *m* bits exprimées sous forme de nombres entiers désignés $D_u'$ et $D_v'$ respectivement, sont

$$D_L' = \mathrm{INT}\left[(253 L_D + 1) \cdot 2^{n-8}\right]$$

$$D'_u = \text{INT}\left[\left(Su'+B\right) \cdot 2^{m-8}\right]$$

et

$$D'_v = \text{INT}\left[\left(Sv'+B\right) \cdot 2^{m-8}\right],$$

avec le paramètre $S$ = 406 + 43/64 et le paramètre $B$ = 35/64, et INT[.] étant une fonction entière qui arrondit n'importe quel nombre, y compris qui arrondit à la valeur entière supérieure suivante n'importe quel nombre ayant une partie fractionnaire supérieure ou égale à 0.5, et qui arrondit à la valeur inférieure n'importe quel nombre ayant une partie fractionnaire inférieure à 0,5.

2. Procédé selon la revendication 1, dans lequel le second nombre de bits m est au moins 11.

3. Procédé selon la revendication 1, dans lequel chacun du premier nombre de bits n et du second nombre de bits $m$ est au moins 11.

4. Procédé selon l'une quelconque des revendications 1 à 3, dans lequel les données acceptées font partie de données vidéo, et dans lequel les valeurs de luminance quantifiées et les valeurs de chrominance quantifiés sont à la même résolution spatiale, de telle sorte qu'en moyenne il existe n + $2m$ bits par pixel de données VDR.

5. Procédé selon l'une quelconque des revendications 1 à 3, dans lequel les données acceptées font partie de données vidéo, et dans lequel les valeurs de chrominance quantifiées sont à la moitié de la résolution spatiale horizontale des valeurs de luminance quantifiées, de telle sorte qu'en moyenne il existe $n + m$ bits par pixel de données VDR.

6. Procédé selon l'une quelconque des revendications 1 à 5,
dans lequel les données vidéo de gamme dynamique visuelle (VDR), représentées par les valeurs numériques $L_D$, $u'$ et $v'$, comportent des données de signal vidéo de gamme dynamique visuelle (VDR), le procédé comprenant en outre :

la mise en correspondance des données de signal vidéo acceptées avec un format de contenant qui est conforme à une interface vidéo héritée ;
dans lequel les données de gamme dynamique visuelle peuvent être transportées sur l'intervalle multimédia héritée.

7. Procédé selon l'une quelconque des revendications 1 à 6, dans lequel les données vidéo comprennent des informations vidéo de dimensionnalité étendue, et dans lequel, pour les informations vidéo de dimensionnalité étendue, la mise en correspondance des données de signal vidéo de gamme dynamique visuelle (VDR) avec le format de contenant comprend :

le codage simultané d'une paire de composantes d'image qui se conforment respectivement à une vue d'oeil gauche et une vue d'oeil droit des informations vidéo ; et
l'entrelacement de la paire de composantes d'image en une image fusionnée stéréoscopiquement, par exemple par :

entrelacement de rangées ;
entrelacement de colonnes ;
entrelacement en damier ; ou
entrelacement côte à côte.

8. Procédé selon la revendication 7, dans lequel l'état de codage comprend en outre l'étape d'augmentation de la fréquence d'images du signal vidéo d'origine, et dans lequel l'étape d'entrelacement préserve un degré de précision spatiale qui est associé au signal vidéo d'origine dans l'image fusionnée stéréoscopiquement.

9. Système configuré pour exécuter le procédé selon l'une quelconque des revendications 1 à 8.

**10.** Programme logiciel comportant des instructions pour exécuter les étapes de procédé selon l'une quelconque des revendications 1 à 8 quand elles sont exécutées par un ordinateur.

FIG. 1

FIG. 2A

FIG. 2B

303

Accept gamma corrected *R' G' B'* and convert the gamma corrected data to linear device dependent *R G B* data

305

Transform the linear *R G B* data to a device independent color space, e.g., CIE *XYZ*.

307

Convert the device independent, e.g., CIE *XYZ* values to $L_D$, *u'*, *v'* data

309

*Quantize the $L_D$, u', v' data*

# FIG. 3

R'G'B'

| 401 | 403 | 407 | 409 |
|-----|-----|-----|-----|
| Gamma corrected $R'G'B'$ to linear device dependent $R\,G\,B$ converter | Linear $R\,G\,B$ data to device independent color space, e.g., CIE $XYZ$ converter. | Device independent, e.g., CIE $XYZ$ values to $L_D$, $u'$, $v'$ converter | Quantizer |

405

406
Device profile

Storage device

# FIG. 4

EP 2 406 943 B1

FIG. 5A (Prior Art)

FIG. 5B (Prior Art)

FIG. 5C (Prior Art)

**FIG. 6**

**FIG. 7A**

| Odd Pixels | | | Even Pixels | | |
|---|---|---|---|---|---|
| $L_{D0}$ [3 2 1] , $v'_0$ [~-1] | $v'_0$ [11 10 9 8 7 6 5 4] , $L_{D0}$ [3 2 1] | $v'_0$ [12 11 10 9 8 7 6 5 4] | $u'_0$ [12 11 10 9 8 7 6 5] , $v'_0$ [4] | $L_{D1}$ [11 10 9 8 7 6 5 4] , $u'_0$ [4 3 2 1] | $u'_0$ [3 2 1 ~-1] , $L_{D1}$ [4 3 2 1] |
| Original $R_0$ or $C_{r0}$ Space | Original $G_0$ or $Y_0$ Space | Original $B_0$ or $C_{b0}$ Space | Original $R_1$ or $C_{r1}$ Space | Original $G_1$ or $Y_1$ Space | Original $B_1$ or $C_{b1}$ Space |

**FIG. 7B**

| Odd Pixels | | | Even Pixels | | |
|---|---|---|---|---|---|
| $L_{D0}$ [4 3 2 1] , $v'_0$ [~-1] | $v'_0$ [12 11 10 9 8 7 6 5] , $L_{D0}$ [3 2 1] | $v'_0$ [11 10 9 8 7 6 5 4] | $u'_0$ [11 10 9 8 7 6 5 4] , $v'_0$ | $L_{D1}$ [12 11 10 9 8 7 6 5 4] , $u'_0$ | $u'_0$ [3 2 1 ~-1] , $L_{D1}$ [4 3 2 1] |
| Original $R_0$ or $C_{r0}$ Space | Original $G_0$ or $Y_0$ Space | Original $B_0$ or $C_{b0}$ Space | Original $R_1$ or $C_{r1}$ Space | Original $G_1$ or $Y_1$ Space | Original $B_1$ or $C_{b1}$ Space |

**FIG. 7C**

| Odd Pixels | | | Even Pixels | | |
|---|---|---|---|---|---|
| $L_{D0}$ [5 4 3 2 1] , $v'_0$ [~-1] | $v'_0$ [13 12 11 10 9 8 7] , $L_{D0}$ [3 2 1] | $v'_0$ [10 9 8 7 6] , $u'_0$ | $u'_0$ [10 9 8 7 6 5 4 3] , $v'_0$ | $L_{D1}$ [13 12 11 10 9 8 7] , $u'_0$ [4 3 2 1] | $u'_0$ [2 1 ~-1] , $L_{D1}$ [5 4 3 2 1] |
| Original $R_0$ or $C_{r0}$ Space | Original $G_0$ or $Y_0$ Space | Original $B_0$ or $C_{b0}$ Space | Original $R_1$ or $C_{r1}$ Space | Original $G_1$ or $Y_1$ Space | Original $B_1$ or $C_{b1}$ Space |

| Odd Pixels | | Even Pixels | |
|---|---|---|---|
| $L_{D0}$ | $v'_0$ | $L_{D1}$ | $u'_0$ |
| 10 9 8 7 6 5 4 3 2 1 | 10 9 8 7 6 5 4 3 2 1 | 10 9 8 7 6 5 4 3 2 1 | 10 9 8 7 6 5 4 3 2 1 |
| Original $Y_0$ space | Original $C_{b0}$ space | Original $Y_1$ space | Original $C_{r0}$ space |

# FIG. 8

**Odd Pixels** | | **Even Pixels** | |
| $L_{D0}$ | $v'_0$ | $L_{D1}$ | $u'_0$ |
| 13 12 11 10 9 8 7 6 5 4 | 13 12 11 10 9 8 7 6 5 4 | 13 12 11 10 9 8 7 6 5 4 | 13 12 11 10 9 8 7 6 5 4 |
| Original $Y_0$ space | Original $C_{b0}$ space | Original $Y_1$ space | Original $C_{r0}$ space |

CHANNEL 1

## FIG. 9A

| **Odd Pixels** | | | | **Even Pixels** | | | |
|---|---|---|---|---|---|---|---|
| $L_{D0}$ | $v'_0$ | $u'_0$ | $v'_1$ | $L_{D1}$ | $v'_1$ | $u'_1$ | $u'_1$ |
| ~3 3 2 1 | 3 2 1 | 3 2 1 | 13 12 11 10 9 8 7 6 5 4 | ~3 3 2 1 | 3 2 1 | 3 2 1 | 13 12 11 10 9 8 7 6 5 4 |
| Original $Y_0$ space | | Original $C_{b0}$ space | | Original $Y_1$ space | | Original $C_{r0}$ space | |

CHANNEL 2

## FIG. 9B

EP 2 406 943 B1

| Odd Pixels | | Even Pixels | |
|---|---|---|---|
| $L_{D0}$ | $v'_0$ | $L_{D1}$ | $u'_0$ |
| 13 12 11 10 9 8 7 6 5 4 | 13 12 11 10 9 8 7 6 5 4 | 13 12 11 10 9 8 7 6 5 4 | 13 12 11 10 9 8 7 6 5 4 |
| Original $Y_0$ space | Original $C_{b0}$ space | Original $Y_1$ space | Original $C_{r0}$ space |

CHANNEL 1

# FIG. 9C

| Odd Pixels | | | | Even Pixels | | | |
|---|---|---|---|---|---|---|---|
| $L_{D0}$ | $v'_0$ | $u'_0$ | $v'_0$ | $v'_1$ | $L_{D1}$ | $v'_1$ | $u'_1$ | $v'_1$ | $u'_1$ |
| ~1 1 3 2 | 3 2 | 3 2 1 | 1 | 13 12 11 10 9 8 7 6 5 4 | ~1 1 3 2 | 3 2 | 3 2 1 | 1 | 13 12 11 10 9 8 7 6 5 4 |
| Original $Y_0$ space | | | Original $C_{b0}$ space | Original $Y_1$ space | | | Original $C_{r0}$ space |

CHANNEL 2

# FIG. 9D

| Odd Pixels | | Even Pixels | |
|---|---|---|---|
| $L_{D0}$ | $v'_0$ | $L_{D1}$ | $u'_0$ |
| 13 12 11 10 9 8 7 6 5 4 | 13 12 11 10 9 8 7 6 5 4 | 13 12 11 10 9 8 7 6 5 4 | 12 11 10 9 8 7 6 5 4 |
| Original $Y_0$ space | Original $C_{b0}$ space | Original $Y_1$ space | Original $C_{r0}$ space |

CHANNEL 1

## FIG. 9E

| Odd Pixels | | | | | | Even Pixels | | | | | |
|---|---|---|---|---|---|---|---|---|---|---|---|
| $v'_0$ | $L_{D0}$ | $v'_0$ | $u'_0$ | $L_{D0}$ | $v'_1$ | $v'_1$ | $L_{D1}$ | $v'_1$ | $u'_1$ | $L_{D1}$ | $u'_1$ |
| ~1 | 1 | 3 | 2 | 3 2 | 3 2 1 | 1 13 12 11 10 9 8 7 6 5 4 | ~1 1 | 3 | 2 3 2 | 3 2 1 | 1 13 12 11 10 9 8 7 6 5 4 |
| Original $Y_0$ space | | Original $C_{b0}$ space | | Original $Y_1$ space | | Original $C_{r0}$ space | | | | | |

CHANNEL 2

## FIG. 9F

Source of VDR signals ,e.g ,.Blu -Ray player
**1001**
HDMI — 1003

HDMI
1005 —

Legacy audio-visual receiver with HDMI pass-through & on screen menu generator
**1007**

HDMI — 1009

HDMI
1011 —

VDR-capable Display device
**1013**

# FIG. 10

FIG. 11

Left-Eye View — 1101

Right-Eye View — 1103

Row Interleaved
1111
Frame 1  Frame 2  Frame 3  Frame 4  Frame 5

Column Interleaved
1113
Frame 1  Frame 2  Frame 3  Frame 4  Frame 5

Checkerboard Interleaved
1115
Frame 1  Frame 2  Frame 3  Frame 4  Frame 5

Side-by-Side
1121
Frame 1  Frame 2  Frame 3  Frame 4  Frame 5

Double Frame Rate
1123
Frame 1  Frame 2  Frame 3  Frame 4  Frame 5  Frame 6  Frame 7  Frame 8  Frame 9  Frame 10

Double Bit Depth
1125
Frame 1  Frame 2  Frame 3  Frame 4  Frame 5

EP 2 406 943 B1

EP 2 406 943 B1

1200

1201
Define data that relate to a signal
for video material that is
characterized by an extended
dynamic range/dimensionality

1202
Map the defined video signal data
to a container format that
conforms to a legacy video
interface

FIG. 12A

1211
Compute a fixed point log-
luminance value from a physical
luminance value that is associated
with the extended range video
material

1212
Compute a projective
transformation on a set of
tristimulus color values that are
associated with the extended
range video material, in which the
projective transformation defines
color values over at least two
linear color scales

1210 FIG. 12B

1220

1221
Select, from among an order with
which the color values are related
on the color scales, every other
pair of color values from each of
the color scales

1222

Map with the selected pairs of
values

FIG. 12C

1231
Map most significant bits for each
of the color values from a first of
the two color scales to even pixels
of a first color channel of the 4:4:4
data container

1232

Map most significant bits for each
of the color values from a second
of the two color scales to odd
pixels of a first color channel of
the 4:4:4 data container

1230 FIG. 12D

38

FIG. 13

Interface 1405                                                                    1400

Routing
fabric
1410

| 1401 | 1402 | 1403 | 1404 |
| Input/output | Processor | Storage | DSP |

1411

Configurable/programmable
processing elements

1414

DSP

1412

Storage dedicated to
configurable/programmable
processing elements

# FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61159003 B
- US 61239176 B
- US 61294005 B
- US 61082217 B, Husak, Ruhoff, Tourapis and Leontaris
- US 2009050809 W
- US 61082220 B, Tourapis, Husak, Leontaris and Ruhoff
- US 2009050815 W
- US 61191416 B, Pehalawatta and Tourapis
- US 2009055819 W
- US 61099542 B, Tourapis, Leontaris and Pehalawatta
- US 2009056940 W
- US 61140886 B, Pehalawatta, Tourapis and Leontaris
- US 61143087 B, Tourapis and Pehalawatta

**Non-patent literature cited in the description**

- **LARSON G W.** LogLuv encoding for full-gamut, high-dynamic range images. *JOURNAL OF GRAPHICS, ASSOCIATION FOR COMPUTING MACHINERY,* 22 January 1999, vol. 3 (1), ISSN 1086-7651, 15-31
- **GREGORY W. LARSON.** the LogLuv encoding for full-gamut, high dynamic range images. *Journal of Graphics Tools,* 1998, 15-31